(19) Europäisches Patentamt
European Patent Office
Office européen des brevets

(11) **EP 3 078 477 B1**

(12) **EUROPÄISCHE PATENTSCHRIFT**

(45) Veröffentlichungstag und Bekanntmachung des Hinweises auf die Patenterteilung:
**10.06.2020 Patentblatt 2020/24**

(51) Int Cl.:
**B29C 49/04** *(2006.01)*     **B29C 48/30** *(2019.01)*
**B29C 48/92** *(2019.01)*     B29C 48/09 *(2019.01)*
**B29C 48/32** *(2019.01)*

(21) Anmeldenummer: **16164508.0**

(22) Anmeldetag: **08.04.2016**

(54) **VERFAHREN UND BLASFORMANLAGE ZUR EXTRUSION VON VORFORMLINGEN, DIE DURCH BLASFORMEN ZU KUNSTSTOFFHOHLKÖRPERN AUFGEWEITET WERDEN**

METHOD AND DEVICE FOR THE EXTRUSION OF PREFORMS WHICH ARE EXTENDED INTO PLASTIC HOLLOW BODIES THROUGH BLOW MOULDING

PROCEDE ET APPAREIL D'EXTRUSION D'EBAUCHES QUI SONT TRANSFORMEES PAR SOUFFLAGE EN CORPS CREUX EN PLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.04.2015 DE 102015105538**

(43) Veröffentlichungstag der Anmeldung:
**12.10.2016 Patentblatt 2016/41**

(73) Patentinhaber: **Feuerherm, Max**
**53840 Troisdorf (DE)**

(72) Erfinder:
• **Feuerherm, Harald**
 **53840 Troisdorf (DE)**
• **Kappen, Günther**
 **53840 Troisdorf (DE)**
• **Deckwerth, Horst**
 **53840 Troisdorf (DE)**
• **Kappen-Feuerherm, Rolf**
 **53840 Troisdorf (DE)**
• **Feuerherm, Max**
 **53840 Troisdorf (DE)**

(74) Vertreter: **Lorenz, Bernd Ingo Thaddeus**
**Andrejewski - Honke**
**Patent- und Rechtsanwälte Partnerschaft mbB**
**An der Reichsbank 8**
**45127 Essen (DE)**

(56) Entgegenhaltungen:
**EP-A1- 0 885 711     EP-A2- 1 023 984**
**DE-A1-102012 111 117     DE-B3-102009 058 361**
**US-A1- 2007 278 721**

EP 3 078 477 B1

## Beschreibung

Die Erfindung betrifft ein Verfahren zur Extrusion von Vorformlingen, die an der Unterseite eine Extrusionswerkzeuges aus einem ringförmigen Düsenspalt des Extrusionswerkzeuges vertikal austreten und durch Blasformen zu Kunststoffhohlkörpern aufgeweitet werden, wobei die Geometrie des Düsenspaltes während der Extrusion der Vorformlinge verändert wird, wobei zur Veränderung der Düsenspaltgeometrie zumindest eine elastisch deformierbare Hülse verwendet wird, die innerhalb des Extrusionswerkzeuges horizontal verstellbar angeordnet ist und eine innere Umfangsfläche oder eine äußere Umfangsfläche des Ringspaltes bildet, wobei zur horizontalen Verstellung und zur elastischen Verformung der Hülse zumindest zwei programmgesteuerte Stellantriebe verwendet werden, die an Kraftangriffspunkten, welche um 180° versetzt sind, auf den Umfang der elastischen Hülse wirken und wobei die Hülse durch gleichgerichtete Bewegungen der Kraftangriffspunkte horizontal verstellt wird und durch entgegengerichtete und/oder im Betrag unterschiedliche Bewegungen der Kraftangriffspunkte elastisch verformt wird.

Das Extrusionswerkzeug weist einen Dorn und einen Düsenring auf. Durch eine Axialverstellung des Dorns und/oder des Düsenrings ist die Spaltbreite des Düsenspaltes veränderbar. Zur Veränderung der Düsenspaltgeometrie in Umfangsrichtung des Ringspaltes wird eine elastisch deformierbare Hülse verwendet, die am Dorn oder im Düsenring angeordnet sein kann und entsprechend eine innere Umfangsfläche oder eine äußere Umfangsfläche des Ringspaltes bildet. Die elastische Hülse kann sich bis zum austrittsseitigen Ende des Extrusionswerkzeuges erstrecken oder auch mit einem Abstand zum austrittsseitigen Ende des Extrusionswerkzeuges vollständig innerhalb des Extrusionswerkzeuges angeordnet sein. Die elastische Hülse ist innerhalb des Extrusionswerkzeuges horizontal verstellbar, wobei die horizontale Verstellung beliebige Arten der Positionsverlagerung mit einer horizontalen Bewegungskomponente umfassen soll. Insbesondere kann die Hülse an ihrem oberen Ende so gelagert sein, dass die Hülse unter der Wirkung der an den Kraftangriffspunkten auf sie wirkenden Stellantriebe Schwenkbewegungen oder Kippbewegungen innerhalb des Extrusionswerkzeuges ausführen kann. Alternativ kann die elastische Hülse innerhalb des Extrusionswerkzeuges auch in horizontaler Richtung schiebebeweglich angeordnet sein, so dass sie mittels der an den Kraftangriffspunkten auf sie wirkenden Stellantriebe im Wesentlichen horizontal ausgerichtete Querbewegungen ausführen kann. Ferner ist die Hülse mittels der auf sie wirkenden Stellantriebe elastisch verformbar und zeichnet sich vorzugsweise durch ein stetiges Deformationsverhalten aus. Die Vorformlinge treten im thermoplastischen Zustand aus dem Extrusionswerkzeug aus und haben die Form eines Schlauches. Im Rahmen der Erfindung liegt es aber auch, dass die schlauchförmigen Vorformlinge durch Trennelemente, die innerhalb des Extrusionswerkzeuges oder unterhalb des Extrusionswerkzeuges angeordnet sind, in Längsrichtung aufgetrennt werden.

Ein Verfahren zur Extrusion von Vorformlingen mit den eingangs beschriebenen Merkmalen ist beispielsweise aus EP 0 945 245 A1 bekannt. Bei dem bekannten Verfahren wird die elastische Hülse durch programmgesteuerte Stellbewegungen der an den Kraftangriffspunkten auf die Hülse wirkenden Stellantriebe während der Extrusion der Vorformlinge horizontal verstellt und elastisch verformt, um das Profil des Düsenspaltes in Umfangsrichtung zu verändern. Die Steuerung wird als radiale oder partielle Wanddickensteuerung bezeichnet und bei der Extrusionsblasformung von Behältern eingesetzt, um z. B. bei Kanistern und Containern die Materialverteilung zu verändern.

Die Deformation der elastischen Hülse erfolgt durch Stellantriebe, die an den Kraftangriffspunkten ziehende und drückende Bewegungen auf die Hülse ausüben können. Werden beispielsweise entgegengerichtete, vom Betrag her gleich große Bewegungen der Kraftangriffspunkten auf die elastisch deformierbare Hülse übertragen, so wird die elastische Hülse symmetrisch deformiert. Durch gleichgerichtete und dem Betrag nach gleichgroße Bewegungen der Kraftangriffspunkte kann die Hülse ohne Deformation in horizontaler Richtung verlagert bzw. verschoben werden. Daneben sind Mischformen aus Deformationen und Positionsverlagerung möglich, wenn die Stellwege der an den Kraftangriffspunkten auf die Hülse wirkenden Stellantriebe dem Betrag nach unterschiedlich sind. Es kommt dann zu asymmetrischen bzw. einseitigen Deformationen der Hülse.

Die Deformation der Hülse, insbesondere eine symmetrische Deformation, stellt für die Hülse eine hohe Belastung dar. Damit eine maximal zulässige, durchmesserspezifische Belastung der deformierbaren Hülse nicht überschritten wird, wird der zulässige Stellweg der Stellantriebe in der Regel durch mechanische Anschläge begrenzt. Sofern die Hülse durch gleichgerichtete und dem Betrag nach gleich große Bewegungen der Kraftangriffspunkte lediglich horizontal verstellt werden muss, ist die Hülse einer wesentlich geringeren Belastung ausgesetzt. Die bekannte Steuerung nimmt hierauf keine Rücksicht. Da die Steuerung keinen Unterschied zwischen Deformationshub und deformationsfreier Verschiebung macht, müssen die Stellhübe der Stellantriebe auf den maximal zulässigen Deformationshub begrenzt werden. Der Deformationshub bezeichnet einen Stellhub, der ausschließlich zur Deformation der Hülse genutzt wird.

Zur Erreichung einer optimalen Wanddickenverteilung im blasgeformten Hohlkörper ist häufig eine Profilierung des Ringspaltes in Umfangsrichtung notwendig, die nur durch eine Deformation der Hülse in Verbindung mit einem großen Verschiebeweg der Hülse erreicht werden kann. Der notwendige Verschiebeweg der Hülse ist dann größer als der Stellweg der Stellantriebe, der durch den für eine symmetrische Deformation der Hülse maximal zulässigen Deformationshub begrenzt ist. Um derartige Profilierungen unter Verwendung einer elastischen Hülse realisieren zu können, werden die Hülse und die ihr zugeordneten Stellantriebe an einem Tragring angeordnet, der im Extrusionswerkzeug beweglich angeordnet und mittels eines steuerbaren Zusatzkraftantriebes radial verstellbar ist. Durch Superposition der auf die Hülse wirkenden Stellantriebe und des auf den Tragring wirkenden Zusatzkraftantriebes kann die Geometrie des Düsenringspaltes entsprechend profiliert werden. Solche Vorrichtungen sind aus DE102012111117A1, US2007278721A1 und EP 0 885 711 A1 bekannt. Diese Vorrichtungen sind konstruktiv aufwendige. Sie haben auch den Nachteil, dass zur Verstellung des Tragringes große Verstellkräfte notwendig sind, die wiederum zu Verschleiß und einem erhöhten Wartungsaufwand führen können.

Vor diesem Hintergrund liegt der Erfindung die Aufgabe zugrunde, das eingangs beschriebene Verfahren zur Extrusion von Vorformlingen so auszubilden, dass sowohl eine gegen Überlastung gesicherte Deformation der Hülse als auch ein möglichst großer Schiebeweg realisiert werden können. Insbesondere besteht die Aufgabe darin, ein Steuerungsverfahren anzugehen, welches es erlaubt, ein Extrusionswerkzeug mit mindestens einer elastischen Hülse und zumindest zwei um 180° zueinander versetzten, mit der Hülse verbundene Stellantriebe, auch dann sicher zu betreiben, wenn der verfügbare Stellweg der Stellantriebe deutlich größer ist als der zulässige Deformationshub zur Verformung der Hülse. Der sichere Betrieb ohne eine Überbeanspruchung der elastischen Hülse muss sowohl bei der Inbetriebnahme einer Anlage als auch bei einer sich anschließenden Produktionsphase gewährleistet sein. Ferner muss berücksichtigt werden, dass Fehlbedienungen ebenfalls nicht zu einer Schädigung der elastischen Hülse führen können.

Gegenstand der Erfindung und Lösung der vorgenannten Aufgabe ist ein Verfahren zur Extrusion von Vorformlingen nach Anspruch 1.

Gemäß dem erfindungsgemäßen Verfahren werden die Stellwege der Stellantriebe unter Verwendung einer synchron mit der Extrusion der Vorformlinge ablaufenden Programmsteuerung gesteuert, welche die Bewegungen der Kraftangriffspunkte durch Superposition von zwei Bewegungskomponenten bestimmt. Die erste Bewegungskomponente ermöglicht eine symmetrische Deformation der Hülse und besteht aus gegensinnigen und dem Betrag nach gleich großen Stellwegen der Kraftangriffspunkte. Die zweite Bewegungskomponente ermöglicht eine horizontale Positionsverlagerung der Hülse und besteht aus gleich gerichteten und dem Betrag nach gleich großen Stellwegen der Kraftangriffspunkte. Zumindest für die erste Bewegungskomponente, welche der symmetrischen Deformation zugeordnet ist, wird ein maximal zulässiger Grenzwert vorgegeben, weil gerade die symmetrische Deformation eine hohe Belastung der Hülse darstellt.

Gemäß einer Weiterbildung der Erfindung werden für die erste Bewegungskomponente und für die zweite Bewegungskomponente jeweils Grenzwerte für den maximal zulässigen Stellweg vorgegeben.

Durch Superposition der vorgenannten Bewegungskomponenten können Betriebszustände des Extrusionswerkzeuges erfasst werden, die eine asymmetrische Deformation der Hülse notwendig machen. Die Erfindung beruht auf der Überlegung, dass sich jede Verformung der elastischen Hülse als eine Kombination einer symmetrischen Deformation der Hülse und einer horizontalen Positionsverlagerung der Hülse beschreiben lässt. Die Stellwege der ersten Bewegungskomponente und die Stellwege der zweiten Bewegungskomponente können als separate Funktionen jeweils in Abhängigkeit einer Funktionsgröße, welche mit der Extrusion eines Vorformlings korreliert, festgelegt werden. Die mit der Extrusion eines Vorformlings korrelierende Funktionsgröße definiert eine Profilkurve, welche Stellwege der Kraftangriffspunkte in Abhängigkeit der extrudierten Länge der Vorformlinge und/oder in Abhängigkeit der Extrusionszeit während der Extrusion eines Vorformlings beschreibt.

Die Profilkurve kann mit unterschiedlicher Auflösung bereitgestellt werden. So ist es möglich, dass die Profilkurve abgesehen von einer üblichen Digitalisierung kontinuierlich oder nahezu kontinuierlich definiert ist. Alternativ können auch lediglich einzelne Sollwerte vorgegeben werden, wobei die Übergänge zwischen den einzelnen Vorgabewerten interpoliert werden können.

Unter Verwendung der vorgenannten Profilkurven wird die Geometrie des Düsenspaltes in Umfangsrichtung während der Extrusion der Vorformlinge dynamisch verändert. Erfindungsgemäß werden zwei Profilkurven verwendet, wobei die erste Profilkurve den Anteil einer symmetrischen Deformation der elastischen Hülse berücksichtigt und die zweite Profilkurve nur einen Anteil für die horizontale Positionsverlagerung der Hülse berücksichtigt. Aus den beiden Profilkurven berechnet die Programmsteuerung Sollwertvorgaben für die Stellbewegungen der an den Kraftangriffspunkten auf die Hülse wirkenden Stellantriebe und gibt diese Sollwertvorgaben als Stellimpulse zur Positionsregelung der Antriebe weiter. Der jeweils zulässige Deformationshub zur symmetrischen Verformung der Hülse und der jeweils zulässige Weg zur Positionsverlagerung der Hülse sind so bemessen, dass bei maximal möglicher Deformation und maximaler Positionsverlagerung zu keinem Zeitpunkt eine Überlastung der elastischen Hülse auftreten kann. Für den maximal einzustellenden symmetrischen Deformationsanteil sowie optional auch für den maximal zulässigen Anteil zur Positionsverlagerung der Hülse werden Grenzwerte bestimmt, die optional, wie nachfolgend noch weiter erläutert, in Abhängigkeit weiterer Verfahrensparameter dynamisch angepasst werden können. Beispielsweise hängen die Belastungen, welche zu einer Beschädigung der Hülse führen können, auch von den miteinander verknüpften Parametern Extrusionsdruck, Viskosität des Polymers sowie Materialdurchsatz ab.

Entsprechend können auch weitere Zustandsgrößen während der Extrusion für eine variable Anpassung des zumindest einen Grenzwertes herangezogen werden. Beispielsweise kann die an den Kraftangriffspunkten wirkende Kraft direkt mit Sensoren oder indirekt über die Parameter der Stellantriebe bestimmt werden. Druckkräfte können darüber hinaus auch an der Hülse mit geeigneten Sensoren außerhalb der Kraftangriffspunkte bestimmt werden. Als weitere variable Zustandsgrößen wird exemplarisch auf den gegebenenfalls mittels eines Sensors bestimmbaren Extrusionsdruck, die Extrusionstemperatur sowie den Massedurchsatz verwiesen.

Wenn gemäß einer ersten Variante der Erfindung nur für den symmetrischen Deformationsanteil der Grenzwert festgelegt wird, kann dieser Anteil nur innerhalb der vorgegebenen Grenzen variiert werden, um eine Beschädigung bzw. einen erhöhten Verschleiß der Hülse zu vermeiden, während die Positionsverlagerung als zweite Bewegungskomponente über den gesamten zur Verfügung stehenden Stellweg erfolgen kann. Wenn gemäß einer alternativen Variante der Erfindung für die erste Bewegungskomponente und die zweite Bewegungskomponente jeweils ein Grenzwert vorgegeben wird, sind innerhalb dieser Grenzwerte beliebige Kombinationen einer symmetrischen Deformation und einer horizontalen Positionsverlagerung der Hülse möglich.

Die Stellantriebe können an den Kraftangriffspunkten Zugkräfte und Druckkräfte auf die Hülse ausüben. Die Profilkurven zur Beschreibung der Stellwege für die erste Bewegungskomponente und für die zweite Bewegungskomponente werden vorzugsweise so festgelegt, dass die für die erste Bewegungskomponente festgelegten Stellwege um eine Nulllage einen Stellweganteil in Zugrichtung und einen Stellweganteil in Druckrichtung aufweist und dass die für die zweite Bewegungskomponente festgelegten Stellwege um eine Nulllage einen Stellweganteil in einer ersten Richtung und einen Stellweganteil in entgegengesetzter Richtung aufweist.

Die Beanspruchung der elastischen Hülse durch elastische Deformation ist im Allgemeinen wesentlich größer als die Beanspruchung der Hülse im Falle einer horizontalen Positionsverlagerung der Hülse beispielsweise durch seitliches Verschieben oder Verschwenken. Infolgedessen muss der Grenzwert für den maximal zulässigen Stellweg zur symmetrischen Deformation der Hülse kleiner gewählt werden als der Grenzwert für die maximal zulässige horizontale Positionsverlagerung der Hülse, sofern im Rahmen der Erfindung auch für diese zweite Bewegungskomponente die Festlegung eines Grenzwertes vorgesehen ist.

Die Grenzwerte für den maximal zulässigen Stellweg der ersten Bewegungskomponente und den maximal zulässigen Stellweg der zweiten Bewegungskomponente können individuell festgelegt werden und voneinander unabhängig sein. Dabei liegt es im Rahmen der Erfindung, dass in der Programmsteuerung apparatespezifische Kennwerte und/oder Korrekturwerte zur Berücksichtigung anwendungsspezifischer Prozessbedingungen hinterlegt werden, die bei der Festlegung des Grenzwertes für den maximal zulässigen Stellweg zur symmetrischen Deformation der Hülse und/oder bei der Festlegung des Grenzwertes für den maximal zulässigen Stellweg zur horizontalen Positionsverlagerung der Hülse berücksichtigt werden.

Eine weitere Ausgestaltung des erfindungsgemäßen Verfahrens sieht vor, dass der Grenzwert für den maximal zulässigen Stellweg zur symmetrischen Deformation der Hülse als variable Größe in Abhängigkeit einer veränderlichen Zustandsgröße während der Extrusion festgelegt wird. Eine solche variable Anpassung kann im Rahmen der Erfindung optional auch für die Positionsverlagerung der Hülse vorgesehen sein.

Als variable Zustandsgrößen können beispielsweise die Stellwege der beiden Bewegungskomponenten zugrundegelegt werden. So liegt es im Rahmen der Erfindung, dass der Grenzwert für den maximal zulässigen Stellweg zur symmetrischen Deformation der Hülse als variable Größe in Abhängigkeit des Stellweges der zweiten Bewegungskomponente festgelegt wird. In entsprechender Weise kann auch vorgesehen sein, dass der Grenzwert für den maximal zulässigen Stellweg zur Positionsverlagerung der Hülse als variable Größe in Abhängigkeit des Stellweges der ersten Bewegungskomponente festgelegt wird.

Es wird also eine Wechselwirkung zwischen den beiden einzustellenden Bewegungsanteilen berücksichtigt. Ein Vorteil dieser Verfahrensausgestaltung ist, dass durch eine Kopplung der für die Bewegungskomponenten festgelegten Stellwege potentielle Reserven ausgenutzt werden können, weil beispielsweise bei einer geringen Deformation der elastisch deformierbaren Hülse ein größerer Stellweg zur Horizontalverlagerung zugelassen werden kann.

Wie zuvor erläutert, können für eine variable Anpassung des Grenzwertes für die erste Bewegungskomponente und optional auch für den Grenzwert der zweiten Bewegungskomponente die Stellwege der jeweils anderen Bewegungskomponente herangezogen werden. Dabei ist zu berücksichtigen, dass die Stellwege als Soll-Vorgabe von der Programmsteuerung vorgegeben werden. Es ist also gemäß einer Variante des erfindungsgemäßen Verfahrens möglich, die Stellwege anhand der für die Stellantriebe vorgegebenen Programmkurven alleine aus den Vorgabedaten zu bestimmen.

Es ist jedoch zu berücksichtigen, dass je nach dem Betriebszustand der eingesetzten Extrusionsvorrichtung sowie der Ausgestaltung der Stellantriebe Ist-Werte der Stellwege von Soll-Werten abweichen können. Vor diesen Hintergrund kann gemäß einer alternativen Verfahrensführung auch für die erfindungsgemäße Überwachung zumindest eines Grenzwertes auf die Ist-Positionen der elastischen Hülse an den Kraftangriffspunkten oder an einem anderen Ort (z. B. 90° versetzt zu den Kraftangriffspunkten), der Stellantriebe bzw. deren Übertragungsglieder zurückgegriffen werden.

Hinsichtlich einer Abfrage von Ist-Positionen kommen im Rahmen der Erfindung unterschiedliche Ansätze in Betracht. Zunächst können - wenn verfügbar - Weggeberpositionen der Stellantriebe ausgewertet werden. Darüber hinaus kommen auch Wegmesseinrichtungen und -sensoren in Betracht. Neben einer kontinuierlichen Positionsbestimmung können auch diskrete Positionen wie vordefinierte Grenzpositionen überwacht werden. Hierzu können beispielsweise Näherungsschalter eingesetzt werden.

Wie zuvor erläutert, können nicht nur Soll- und/oder Ist-Werte des Stellweges für eine dynamische Grenzwertanpassung genutzt werden. Als weitere Zustandsgröße kann beispielsweise eine an der Hülse wirkende Kraft oder auch ein Druck bestimmt werden, um Überlastzustände zu vermeiden.

Für eine direkte Kraftbestimmung können beispielsweise Sensoren zur Kraftmessung an einer geeigneten Stelle angeordnet werden. Entsprechende Sensoren können direkt an der elastischen Hülse, beispielsweise an den Krafteinleitungspunkten, oder aber auch an den Stellantrieben vorgesehen sein.

Darüber hinaus ist eine indirekte Kraftbestimmung zusätzlich oder alternativ durch unterschiedliche Maßnahmen möglich. Bei elektrischen Antrieben kann eine von diesen Antrieben ausgeübte Kraft durch eine Bestimmung der Stromaufnahme und/oder des Drehmomentes ermittelt werden. Wenn die Stellantriebe über hydraulische Servozylinder verfügen, kann beispielsweise die auf die Hülse ausgeübte Kraft durch die Bestimmung eines Differenzdrucks zwischen den Kammern des Servozylinders erfolgen.

Die direkte oder indirekte Bestimmung des Kraftaufwandes bzw. der auf die Hülse wirkenden Kraft ermöglicht eine genauere Bestimmung des Zustandes des Gesamtsystems, wobei die Daten - wie bereits zuvor erläutert - auch für eine dynamische Anpassung des Grenzwertes für die erste Bewegungskomponente und gegebenenfalls auch für den Grenzwert der zweiten Bewegungskomponente genutzt werden können.

Wie zuvor beschrieben, werden die wirkenden Kräfte direkt oder indirekt als zusätzliche Zustandsgröße erfasst, um zumindest den Grenzwert für den maximal zulässigen Stellweg zur symmetrischen Deformation und ggf. auch den Grenzwert für die zweite Bewegungskomponente bedarfsgerecht anpassen zu können. Grundsätzlich können die gemessenen Kräfte auch in einer Abwandlungen von dem beschriebenen Konzept alleine für eine variable Steuerung und/oder Anpassung genutzt werden. Darüber hinaus können Kräfte auch in an sich bekannter Weise für eine Notabschaltung, einen Überlastschutz oder dergleichen eingesetzt werden.

Der vorliegenden Erfindung liegt aber gerade die Erkenntnis zugrunde, dass durch die Berücksichtigung der wirkenden Kräfte als zusätzliche Zustandsgröße eine besonders effektive und sichere Steuerung möglich ist.

Ein weiterer Aspekt der Erfindung betrifft die Implementierung des erfindungsgemäßen Verfahrens in einer Anlage, die ein Extrusionswerkzeug mit einer elastisch deformierbaren Hülse und mit zumindest zwei programmgesteuerten Stellantrieben gemäß dem Oberbegriff des Anspruches 1 aufweist, wobei die Stellantriebe in an sich bekannter Weise von separaten Programmen gesteuert werden, die synchron mit der Extrusion der Vorformlinge ablaufen und jeweils den Stellweg des zugeordneten Stellantriebes in Abhängigkeit einer mit der Extrusion eines Vorformlings korrelierenden Funktionsgröße bestimmen. Erfindungsgemäß werden die Stellsignale zur Steuerung der Antriebe zunächst einer Auswerteeinheit zugeführt, welche die Stellsignale in eine erste Bewegungskomponente zur symmetrischen Deformation der Hülse und eine zweite Bewegungskomponente zur horizontalen Positionsverlagerung der Hülse aufspaltet und welche zumindest die errechneten Stellwege der ersten Bewegungskomponente und optional auch der zweiten Bewegungskomponente mit dem Grenzwert bzw. den Grenzwerten für den maximal zulässigen Stellweg vergleicht. Wenn die vorgegebenen Grenzwerte nicht überschritten werden, werden die Stellsignale zur Steuerung der Stellantriebe freigegeben und an die Stellantriebe weitergeleitet. Sofern zumindest ein Grenzwert überschritten wird, sind verschiedene alternative oder auch sich ergänzende Verfahrensmaßnamen möglich. So kann bei Überschreiten zumindest eines Grenzwertes das an die Stellantriebe weitergeleitete Steuersignal mit der Maßgabe korrigiert werden, dass nur ein dem Grenzwert entsprechender Anteil der von dem Programm vorgegebenen Sollwerte ausgeführt wird. Nach Überschreiten zumindest eines Grenzwertes kann alternativ der Ablauf des die Stellantriebe steuernden Programms blockiert werden. Ferner kann ein Fehlersignal abgegeben werden, wenn ein Sicherheitsabstand in Bezug auf mindestens einen der Grenzwerte unterschritten wird oder die Grenzwerte nicht eingehalten werden.

Bei der Auswerteeinheit im Sinne der vorliegenden Erfindung kann es sich um eine separate, zwischengeschaltete Baugruppe handeln, welche in die Gesamtanlage integriert ist. Alternativ kann die Auswerteeinheit auch vollständig als Softwareprogramm, Programmroutine oder Programmsequenz in eine übergeordnete Anlagensteuerung integriert sein.

Im Rahmen der Erfindung liegt es, dass zusätzlich zu den in einer ersten Deformationsachse wirkenden Stellantrieben zumindest zwei weitere Stellantriebe verwendet werden, deren Kraftwirkungsrichtung in einer zweiten Deformationsachse radial zur Hülse ausgerichtet ist. Mittels dieser in einer zweiten Deformationsachse wirksamen Stellantriebe kann die elastisch deformierbare Hülse nicht nur in eine runde und eine elliptische Form gebracht werden, sondern von diesen Grundformen abweichende Querschnittsgeometrien erhalten. Die Gesamtverstellung der Hülse ergibt sich aus einer Superposition der Verstellung in den beiden Achsen. Die zusätzliche Verformung der Hülse durch Einwirkung von Kräften in einer zweiten Deformationsachse stellt eine extreme Belastung der elastisch deformierbaren Hülse dar. Diesem Umstand wird im Rahmen der Erfindung dadurch Rechnung getragen, dass der Grenzwert für die erste Bewegungskomponente der in der ersten Deformationsachse wirkenden Stellantriebe reduziert wird, wenn die in der zweiten Deformationsachse wirksamen Stellantriebe Kräfte auf die Hülse ausüben, die zu einer Deformation der Hülse beitragen. Der Grenzwert für die erste Bewegungskomponente kann um einen vorgegebenen Faktor reduziert werden. Weitere Differenzierungen sind möglich. Dabei kann der Grenzwert für die erste Bewegungskomponente insbesondere auch in Abhängigkeit des an der Hülse wirksamen Stellweges der in der zweiten Deformationsachse auf die Hülse wirkenden Stellantriebe verändert werden. Eine entsprechende Funktion zur Korrektur des Grenzwertes kann in einer Programmsteuerung hinterlegt sein.

Gemäß einer ersten Ausführung des vorstehend erläuterten Verfahrens, bei dem zusätzliche Stellantriebe in einer zweiten Deformationsachse verwendet werden, sind die in der zweiten Deformationsachse wirksamen Stellantriebe nicht mit der elastisch deformierbaren Hülse verbunden und werden aus einer Ruhestellung, in der die Stellantriebe keinen Kontakt mit der Hülse haben, gegen die Hülse bewegt. Wenn die in der zweiten Deformationsachse wirksamen Stellantriebe mit der elastisch deformierbaren Hülse in Kontakt treten und Kräfte auf die Hülse ausüben, kann die Hülse durch das Zusammenspiel der Stellantriebe eine von der elliptischen Form abweichende Form deformiert werden. Zur Kompensation der zusätzlichen Verformungskräfte wird der für die erste Bewegungskomponente maßgebende Grenzwert wie vorbeschrieben korrigiert. Die Kraftwirkung der in der zweiten Deformationsachse angeordneten Stellantriebe wirkt sich auf die zulässige Positionsverlagerung der Hülse nicht oder nicht wesentlich aus. Daher wird der Grenzwert für die zweite Bewegungskomponente nicht beeinflusst. Die in der zweiten Deformationsachse wirksamen Stellantriebe können nach einem Programm, welches synchron mit der Extrusion der Vorformlinge abläuft gesteuert werden. Im Rahmen der Erfindung liegt es jedoch auch, dass die in der zweiten Deformationsachse wirksamen Stellantriebe nur zwischen einer Ruheposition und einer zweiten Position, in der sie auf die Hülse einwirken, verstellt werden. Auch kommt in Betracht, dass jeder Stellantrieb der in der zweiten Deformationsachse angeordneten Stellantriebe unabhängig von dem anderen Stellantrieb angesteuert wird. In diesem Fall bestimmt derjenige Stellantrieb, der am stärksten auf die elastische Hülse wirkt, die Änderung des Grenzwertes für die erste Bewegungskomponente der in der ersten Deformationsachse wirkenden Stellantriebe.

Eine weitere Ausgestaltung des erfindungsgemäßen Verfahrens sieht vor, dass die in der zweiten Deformationsachse wirksamen Stellantriebe mit der Hülse verbunden werden, wobei die Verbindung eine horizontale Positionsverlagerung der Hülse in der ersten Deformationsachse zulässt. Die Verbindung kann insbesondere als Gelenkverbindung ausgebildet sein. Wenn die Stellwege der in der zweiten Deformationsachse wirksamen Stellantriebe eine Deformation der Hülse in der zweiten Deformationsachse bewirken, wird bei Durchführung des erfindungsgemäßen Verfahrens der Grenzwert für die erste Bewegungskomponente der in der ersten Deformationsachse wirkenden Stellantriebe reduziert. Die Reduzierung kann aus einem konstanten Faktor bestehen oder abhängig sein von einer Korrekturfunktion, welche den von den Stellantrieben der zweiten Deformationsachse ausgeübten Deformationsanteil berücksichtigt.

Bei allen zuvor beschriebenen Ausgestaltungen sind die erste Deformationsachse und die zweite Deformationsachse vorzugsweise in einem rechten Winkel zueinander ausgerichtet, wobei eine Anordnung unter einem beliebigen Winkel jedoch nicht ausgeschlossen sein soll.

Das erfindungsgemäße Verfahren kann auch zur Düsenzentrierung genutzt werden, ohne dass die Produktion, d. h. das Herstellen von Vorformlingen, unterbrochen werden muss. Zur Düsenzentrierung werden zwei in einer Deformationsachse auf die elastische Hülse wirkende Stellantriebe und ein zusätzlicher Stellantrieb, dessen Kraftwirkungsrichtung unter einem Winkel zur Deformationsachse ausgerichtet ist, verwendet. Vorzugsweise ist die Kraftwirkungsrichtung des zusätzlichen Stellantriebes unter einem rechten Winkel zur Deformationsachse ausgerichtet. Der Bewegungsanteil der Düsenzentrierung in Richtung der Deformationsachse wird separat gesteuert. Dabei werden der von der Programmsteuerung vorgegebene Stellweg für eine horizontale Positionsverlagerung der elastischen Hülse und der Bewegungsanteil zur Düsenzentrierung in Richtung der Deformationsachse überlagert. Der durch Superposition gebildete Stellweg wird dann ausgeführt, wenn der Stellhub innerhalb des für die zweite Bewegungskomponente festgelegten Grenzwertes bleibt. Wenn das Kriterium nicht eingehalten ist, wird der Befehl zur Düsenzentrierung nicht ausgeführt. Eine zweckmäßige Ausgestaltung des erfindungsgemäßen Verfahrens sieht vor, dass ein fester oder von Betriebszuständen abhängiger Grenzwert für den maximal zulässigen Bewegungsanteil der Düsenzentrierung in Richtung der Deformationsachse in der Programmsteuerung hinterlegt wird.

Vorteilhaft ist es, wenn die elastisch deformierbare Hülse und die in der Deformationsachse auf die Hülse wirkenden Stellantriebe auf einem Träger angeordnet werden, der mit einer horizontalen Bewegungskomponente quer zur Deformationsachse bewegbar ist. Der zusätzliche Stellantrieb wirkt auf den Träger und ermöglicht eine Positionsverlagerung des Trägers mit der auf ihm angeordneten Hülse quer zur Deformationsachse, ohne dass die Hülse dabei beansprucht wird. Da der zusätzliche Stellantrieb auf eine andere Ebene des Extrusionswerkzeuges wirkt, wird die Verstellung der elastischen Hülse in Richtung der Deformationsachse durch den Stellhub des zusätzlichen Stellantriebes nicht beeinflusst. Der Stellhub des zusätzlichen Stellantriebes hat keinen Einfluss auf die Grenzwerte, die nach dem erfindungsgemäßen Verfahren für eine symmetrische Deformation der Hülse und eine horizontale Positionsverlagerung der Hülse festgelegt werden.

Bei allen zuvor beschriebenen Ausgestaltungen des erfindungsgemäßen Verfahrens können zusätzliche Schutzeinrichtungen vorgesehen werden, die bei einer Störung der Energieversorgung die elastisch deformierbare Hülse in einen für das System unkritischen Zustand versetzen und/oder eine unkontrollierte Bewegung der Stellantriebe verhindern. Die Schutzeinrichtungen reagieren beispielsweise auf einen Ausfall der Hauptenergie und/oder Hilfsenergie, auf Bauteilversagen und/oder auf Bedienfehler.

Im Rahmen der Erfindung kommen unterschiedliche Implementierungen einer Schutzeinrichtung in Betracht, die nachfolgend lediglich exemplarisch erläutert werden.

Zunächst ist zu berücksichtigen, dass sich kritische Betriebszustände nicht nur bei einer Störung der Energieversorgung sondern auch bei der Inbetriebnahme sowie bei einem Ein- und Ausschalten ergeben können, wobei für alle diese kritischen Betriebszustände auf eine geeignete Schutzeinrichtung zurückgegriffen werden kann.

Lediglich exemplarisch werden nachfolgend einzelne Schutzeinrichtungen erläutert. Wie bereits zuvor beschrieben, können Wegsensoren und Näherungsschalter zur Bestimmung einer Ist-Position eingesetzt werden. Entsprechende Einrichtungen und insbesondere Näherungsschalter können auch Bestandteil einer Schutzeinrichtung sein, wozu eine Steuerung oder der Teil einer Steuerung mit einer Notstromversorgung ausgerüstet sein kann. Darüber hinaus kommen auch einfache mechanische Sperren oder Hubbegrenzer in Betracht. Beispielsweise können vor der Inbetriebnahme auch mechanische Sperren vorgesehen sein, die nach einer Einrichtung der Anlage wieder entnommen werden können, jedoch gemäß bei einem noch nicht sichergestellten Abgleich der Antriebe mit einer Steuerung Fehlpositionen vermeiden.

Darüber hinaus sind auch Hubbegrenzer, Rücksteller oder Fixierelemente als Teil einer Schutzeinrichtung geeignet, welche im stromlosen Zustand die elastisch deformierbare Hülse in einer unkritischen Position halten bzw. in eine unkritische Position zurückbewegen. Hydraulische Antriebe können beispielsweise durch öffnende Ventile oder die Stellabschaltung einer Pumpe druck- und damit kraftlos geschaltet werden. Bei einem Wegfall der von außen auf die elastisch deformierbare Hülse wirkenden Kräfte wird diese sich üblicherweise in eine neutrale Ruheposition bewegen.

Bei elektrischen Antrieben können auch Motorbremsen oder dergleichen vorgesehen sein, um bei einer Störung der Energieversorgung unerwünschte plötzliche Stellhübe zu vermeiden.

Das erfindungsgemäße Verfahren kann sowohl für innen konische als auch für außenkonische Extrusionswerkzeuge verwendet werden.

Im Folgenden wird die Erfindung anhand von Ausführungsbeispielen erläutert. Es zeigen schematisch

Fig. 1a      einen Längsschnitt durch ein Extrusionswerkzeug zur Erzeugung von Vorformlingen mit einer Programmsteuerung nach dem Stand der Technik,

Fig. 1b      einen Querschnitt durch das in Fig. 1a dargestellte Extrusionswerkzeug ebenfalls mit einer Programmsteuerung nach dem Stand der Technik.

Fig. 2a bis 2c      beispielhafte Einstellungen an einer elastischen Hülse des Extrusionswerkzeuges,

Fig. 3      einen Querschnitt durch ein Extrusionswerkzeug mit einer zur Durchführung des erfindungsgemäßen Verfahrens eingerich-teten Programmsteuerung,

Fig. 4a bis 4c      beispielhafte Einstellungen einer elastisch deformierbaren Hülse unter Anwendung des erfindungsgemäßen Verfahrens im Vergleich zu Einstellungen nach dem Stand der Technik,

Fig. 5 und 6      jeweils einen horizontalen Schnitt durch ein Extrusionswerkzeug in Verbindung mit einer Programmsteuerung, die zur Durchführung des erfindungsgemäßen Verfahrens eingerichtet ist,

Fig. 7      einen Querschnitt durch ein Extrusionswerkzeug, welches Stellantriebe in zwei Deformationsachsen aufweist, mit einer zur Durchführung des erfindungsgemäßen Verfahrens eingerichteten Programmsteuerung,

Fig. 8      eine weitere Ausführungsvariante des in Fig. 7 dargestellten Extrusionswerkzeuges,

Fig. 9      einen Querschnitt durch ein Extrusionswerkzeug, welches zwei Stellantriebe in einer Deformationsachse und einen zusätzlichen Stellantrieb zur Düsenzentrierung aufweist, mit einer zur Durchführung des erfindungsgemäßen Verfahrens eingerichteten Programmsteuerung.

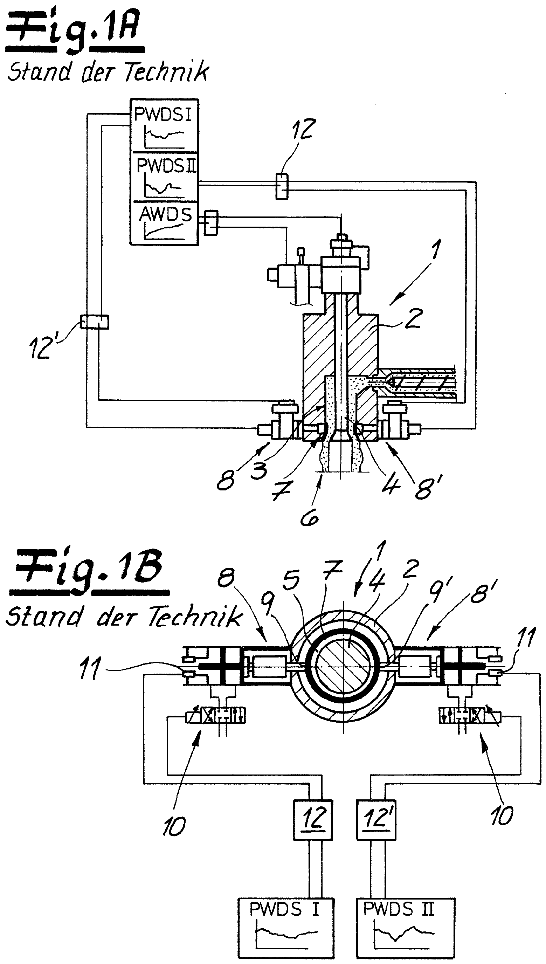

Das in Fig. 1a im Längsschnitt und in Fig. 1b in einem Horizontalschnitt dargestellte Extrusionswerkzeug 1 ist für eine Anlage zum Extrusionsblasformen von Hohlkörpern, z. B. Kanistern, Containern oder Kunststoffkraftstoffbehältern, bestimmt. Es weist ein Düsengehäuse 2 mit einem Düsenring 3 sowie einen axial verstellbaren Dorn 4 auf. Der Dorn 4 und der Düsenring 3 begrenzen einen ringförmigen Düsenspalt 5, aus dem ein schlauchförmiger Vorformling 6 extrudiert wird. Der Vorformling 6 tritt an der Unterseite des Extrusionswerkzeuges 1 vertikal aus und wird durch Blasformen in einer nicht dargestellten Blasformanlage zu einem Kunststoffhohlkörper aufgeweitet. Das Extrusionswerkzeug 1 ist mit zumindest einer elastisch deformierbaren Hülse 7 ausgerüstet, die innerhalb des Extrusionswerkzeuges 1 horizontal verstellbar angeordnet ist und in einem Abschnitt des Düsenspaltes eine innere Umfangsfläche oder eine äußere Umfangsfläche des Düsenspaltes 5 bildet. Zur horizontalen Verstellung und zur elastischen Verformung der Hülse 7 sind zumindest zwei programmgesteuerte Stellantriebe 8, 8' vorgesehen, die an Kraftangriffspunkten 9, 9', welche um 180° versetzt sind, auf den Umfang der elastischen Hülse 7 wirken. Durch gleichgerichtete Bewegungen der Kraftangriffspunkte 9, 9' kann die Hülse 7 horizontal verstellt werden. Durch entgegengerichtete und/oder im Betrag unterschiedliche Bewegungen der Kraftangriffspunkte 9, 9' kann die Hülse 7 elastisch verformt werden. Die Bewegungsangaben beziehen sich jeweils auf ein ortsfestes Koordinatensystem.

Beim Extrusionsblasformen werden die Vorformlinge 6 aus dem ringförmigen Düsenspalt 5 des Extrusionswerkzeuges 1 extrudiert und anschließend in einer Blasform zu Hohlkörpern aufgeweitet. Die Düsenspaltbreite sowie die Düsenspaltgeometrie werden nach Maßgabe eines Wanddickenprogramms und/oder in Abhängigkeit der aus dem Düsenspalt 5 austretenden Schlauchlänge der Vorformlinge geregelt. Die Regelung erfolgt nach Programmkurven eines Wanddickenprogramms. Die Programmkurven sind in der Fig. 1a schematisch dargestellt. Nach Maßgabe einer ersten Programmkurve (AWDS) für eine "Axiale-Wand-Dicken-Steuerung" wird eine axiale Stellbewegung des Dorns geregelt und dadurch die Düsenspaltbreite über den gesamten Umfang variiert. Bei anderen Ausführungen des Extrusionswerkzeuges ist auch eine axiale Stellbewegung des Düsenrings möglich, um die Düsenspaltbreite insgesamt, d. h. über den gesamten Umfang, zu beeinflussen. Die auf die Hülse 7 wirkenden Stellantriebe 8, 8' werden unabhängig voneinander jeweils von einer zugeordneten Programmkurve PWDS I, PWDS II angesteuert. Die Programmkurven PWDS I, PWDS II für eine "Partielle-Wand-Dicken-Steuerung" haben unterschiedliche Verläufe. Infolgedessen führen die beiden Stellantriebe 8, 8' während der Extrusion eines Vorformlings 6 unterschiedliche Stellhübe aus. Die Ansteuerung der Stellantriebe 8, 8' erfolgt jeweils unter Verwendung eines Servoventils 10 sowie eines integrierten Weggebers 11 in separaten Regelkreisen 12, 12'.

Der mögliche Stellhub der Stellantriebe 8, 8' ist größer als der maximal zulässige Deformationshub zur elastischen Deformation der Hülse 7. Zum Schutz der elastischen Hülse 7 wird der Stellweg der Stellantriebe 8, 8' mechanisch begrenzt. Die maximal zulässigen Deformationswege in Zugrichtung und Druckrichtung sind so bemessen, dass bei einem symmetrischen "Ziehen" bzw. einem symmetrischen "Drücken" eine Überlastung der elastischen Hülse in jedem Betriebszustand sicher vermieden wird. Gemäß dem in den Figuren 1a/1b dargestellten Standes der Technik wird der Stellhub des Stellantriebes 8, 8' auf den maximal zulässigen Deformationshub begrenzt.

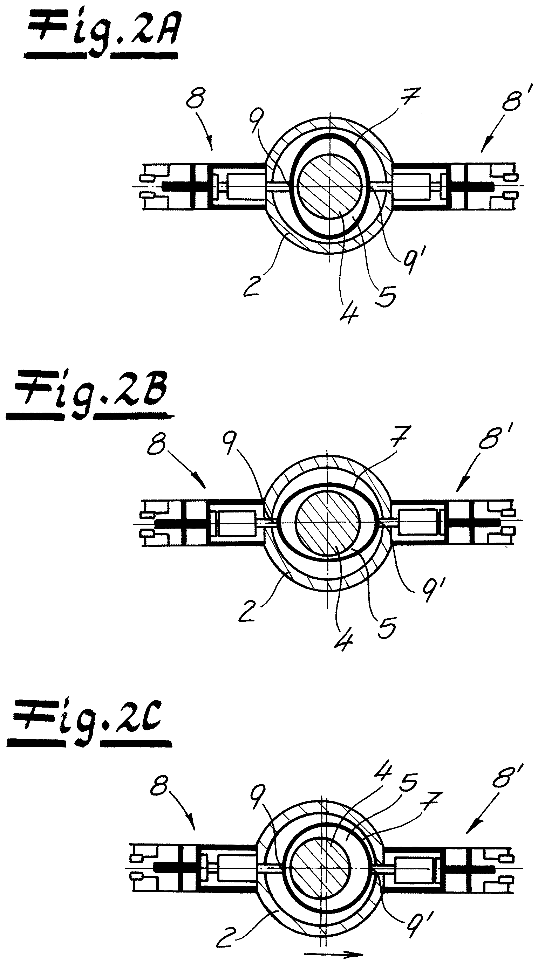

Die Hülse 7 kann durch gleich gerichtete Bewegungen der Kraftangriffspunkte, 9, 9' horizontal verstellt werden. Durch entgegen gerichtete und/oder im Betrag unterschiedliche Bewegungen der Kraftangriffspunkte 9, 9' wird die Hülse 7 elastisch verformt. Die Schnittdarstellungen in den Fig. 2a bis 2c sollen veranschaulichen, welche Belastungen auf die elastisch deformierbare Hülse 7 wirken und welchen Verformungen die elastische Hülse 7 bei einer symmetrischen Deformation durch Druckkräfte (Fig. 2a) und bei einer symmetrischen Deformation durch Zugkräfte (Fig. 2b) ausgesetzt ist. Jeweils dargestellt ist der durch Anschläge begrenzte maximal mögliche Stellweg. Die Fig. 2c zeigt eine Positionsverlagerung der elastischen Hülse 7 durch gleich gerichtete und dem Betrag nach gleich große Stellwege der Kraftangriffspunkte 9, 9'. Da die elastische Hülse 7 hierbei nicht deformiert wird, ist die auf die Hülse wirkende Belastung wesentlich geringer. Aus einer vergleichenden Betrachtung der Fig. 2a bis 2c ist ersichtlich, dass die maximal zulässige Deformation der Hülse 7 nach dem Stand der Technik einen den nutzbaren Stellhub begrenzten Faktor dargestellt und hierdurch der maximale Verstellweg zur horizontalen Verlagerung der Hülse eingeschränkt wird. Für zahlreiche Anwendungen ist der durch den Deformationshub begrenzte Verschiebeweg zur Positionsverlagerung der elastischen Hülse nicht ausreichend.

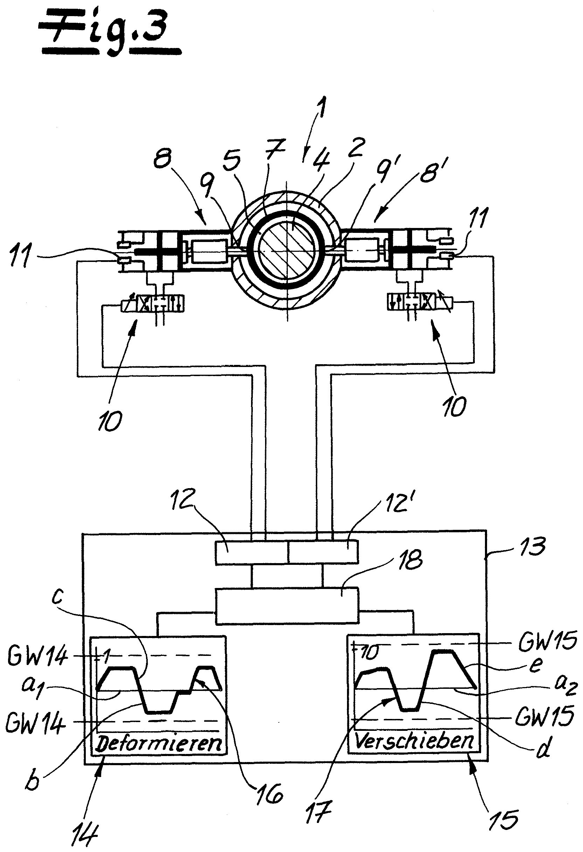

Das erfindungsgemäße Verfahren schafft hier Abhilfe und ermöglicht eine horizontale Verlagerung der elastischen Hülse 7 mit einem größeren Stellhub, ohne dass die Gefahr besteht, dass die elastische Hülse 7 durch den größeren Stellhub der Stellantriebe 8, 8' durch Überlastung geschädigt wird. Die Programmsteuerung 13 zur Durchführung des erfindungsgemäßen Verfahrens ist in Fig. 3 als Blockschaltbild schematisch dargestellt. Das Extrusionswerkzeug 1 hat den anhand der Fig. 1a/1b beschriebenen Aufbau. Lediglich die Anschläge zur Begrenzung des Stellhubes der Stellantriebe 8, 8' entfallen oder werden so positioniert, dass der mögliche Stellhub der Stellantriebe 8, 8' größer ist als der für eine elastische Deformation der Hülse 7 zulässige Wert.

Die Stellwege der Stellantriebe 8, 8' werden unter Verwendung einer synchron mit der Extrusion der Vorformlinge 6 ablaufenden Programmsteuerung 13 gesteuert, welche die Bewegungen der Kraftangriffspunkte 9, 9' durch Superposition von zwei Bewegungskomponenten 14, 15 bestimmt. Die erste Bewegungskomponente 14 ermöglicht eine symmetrische Deformation der Hülse 7 und besteht aus gegensinnigen und dem Betrag nach gleich großen Stellwegen der Kraftangriffspunkte 9, 9'. Die für eine symmetrische Deformation der Hülse 7 notwendigen Stellwege der Kraftangriffspunkte 9, 9' sind durch eine erste Programmkurve 16 dargestellt. Die durch die Programmkurve 16 festgelegten Stellwege weisen um eine Nulllage ($a_1$) einen Stellweganteil (b) in Zugrichtung und einen Stellweganteil (c) in Druckrichtung auf. Die zweite Bewegungskomponente 15 ermöglicht eine horizontale Positionsverlagerung der Hülse 7 und besteht aus gleich gerichteten und dem Betrag nach gleich großen Stellwegen der Kraftangriffspunkte 9,9'. Die Stellwege für horizontale Positionsverlagerung der Hülse 7 werden durch eine zweite Programmkurve 17 festgelegt, die um eine Nulllage ($a_2$) einen Stellweganteil (d) in einer ersten Richtung I und einen Stellweganteil (e) für die entgegengesetzte Bewegungsrichtung aufweist. Für die erste Bewegungskomponente 14 und für die zweite Bewegungskomponente 15 werden in dem dargestellten Ausführungsbeispiel jeweils Grenzwerte GW14, GW15 für den maximal zulässigen Stellweg vorgegeben. Der Grenzwert GW14 für den maximal zulässigen Stellweg zur symmetrischen Deformation der Hülse 7 ist dabei wesentlich kleiner als der Grenzwert GW15 für die maximal zulässige horizontale Positionsverlagerung der Hülse 7, da die elastische Hülse 7 bei einer Positionsverlagerung einer ungleich geringeren Belastung ausgesetzt ist als bei einer Deformation. Vor diesem Hintergrund kann es ausrechend sein, wenn in Abweichung von dem dargestellten Ausführungsbeispiel lediglich für die erste Bewegungskomponente 14 ein Grenzwert GW 14 festgelegt wird. Dies ist gleichbedeutend mit dem Ansatz, dass der für die zweite Bewegungskomponente 15 bestimmte Grenzwert GW 15 außerhalb der zur Verfügung stehenden Stellwege liegt und somit praktisch nicht berücksichtigt werden muss.

Aus den beiden Programmkurven 16, 17 berechnet die Programmsteuerung 13 durch Superposition der Funktionswerte mittels eines Summenbildners 18 die Sollwertvorgaben für die Bewegung der einzelnen, an der elastischen Hülse 7 angebundenen Stellantriebe 8, 8' und gibt diese als Stellimpulse an die den Stellantrieben 8, 8' zugeordneten Regelkreise 12, 12' weiter. Der durch die Programmkurve 16 definierte Deformationshub und der die Programmkurve 17 bestimmte Stellweg zur horizontalen Positionsverlagerung der Hülse 7 sind so bemessen, dass bei einer maximal möglichen Deformation der Hülse 7 und bei einer gleichzeitig auftretenden maximalen Positionsverlagerung der Hülse 7 zu keinem Zeitpunkt eine Überbelastung oder plastische Verformung der Hülse 7 auftreten kann. Für den maximal zulässige Deformationsanteil gemäß der Programmkurve 16 und den maximal möglichen Verschiebeanteil zur Positionsverlagerung der Hülse 7 gemäß der zweiten Programmkurve 17 gibt es jeweils einen bei der Inbetriebnahme des Extrusionswerkzeuges 1 festgelegten Grenzwert GW14, GW15. Innerhalb der durch die Grenzwerte GW14, GW15 vorgegebenen Bereiche können der Deformationsanteil und der Verschiebeanteil für eine Positionsverlagerung der elastischen Hülse 7 beliebig miteinander kombiniert werden.

Die Programmkurven 16, 17, welche den Stellweg für eine symmetrische Deformation der Hülse sowie den Stellweg zur horizontalen Verlagerung der Hülse 7 definieren, werden synchron mit einer der Fig. 1a entsprechenden axialen Wanddickensteuerung AWDS abgearbeitet. Da sowohl ein symmetrisches Drücken, ein symmetrisches Ziehen als auch eine Verschiebung der elastischen Hülse in beiden Richtungen möglich ist, sieht eine bevorzugte Darstellung der Profilkurve 16, 17 vor, dass die Werte für die Verstellung sich jeweils um eine Mittellage $a_1, a_2$ bewegen, die einer Grundeinstellung der Hülse 7 zugeordnet ist.

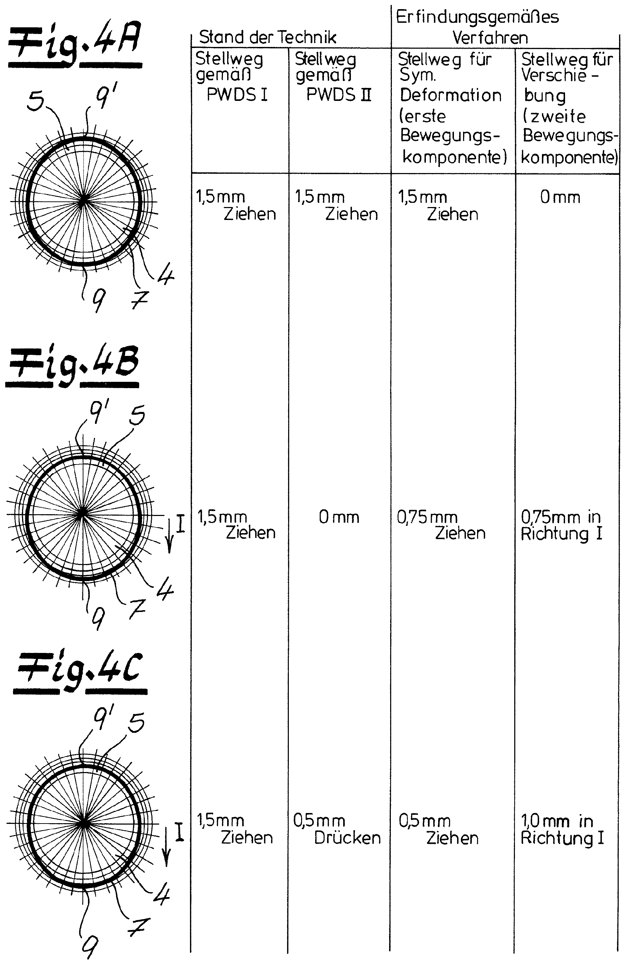

Die Fig. 4a bis 4c zeigen für beispielhaft dargestellte Funktionsstellungen der elastischen Hülse 7 die notwendigen Einstellungen der Stellantriebe 8, 8' unter Anwendung des erfindungsgemäßen Verfahrens im Vergleich zu Einstellungen nach dem Stand der Technik. Die Fig. 4a zeigt eine symmetrische Deformation der Hülse 7 durch einen gegensinnigen und dem Betrag nach gleich großen Stellweg von 1,5 mm der beiden Kraftangriffspunkten 9, 9'. Die erste Programmkurve 16 liefert das Signal zur symmetrischen Deformation der Hülse um 1,5 mm. Der durch die zweite Programmkurve 17 beigesteuerte Verschiebeanteil ist null. In der Fig. 4b wird die Hülse 7 asymmetrisch deformiert, was nach dem Stand der Technik durch eine Bewegung des durch die Programmkurve PWDS I gesteuerten Stellantriebes in Zugrichtung um 1,5 mm realisiert wird. Gemäß dem erfindungsgemäßen Verfahren wird das Profil der Hülse 7 durch Überlagerung einer durch die Programmkurve 16 vorgegebenen symmetrischen Deformation um 0,75 mm in Zugrichtung und einer durch die zweite Programmkurve 17 bestimmten Positionsverlagerung der Hülse 7 um 0,75 mm in der Bewegungsrichtung I erzeugt. Im Ausführungsbeispiel der Fig. 4c wird die elastische Hülse 7 in ein Profil gebracht, welches nach dem Stand der Technik durch eine Stellbewegung des durch die Programmkurve PWDS I gesteuerten Stellantriebes in Zugrichtung um 1,5 mm und durch eine Stellbewegung des durch die Programmkurve PWDS II gesteuerten Stellantriebes um 0,5 mm in Druckrichtung erzeugt wird. Gemäß dem erfindungsgemäßen Verfahren wird das Profil der Hülse 7 durch Superposition einer durch die erste Programmkurve 16 bestimmten symmetrischen Deformation um 0,5 mm in Zugrichtung und einer durch die zweite Programmkurve 17 definierten Horizontalverschiebung der Hülse um 1,0 mm in der Bewegungsrichtung I erzeugt. Im Falle einer horizontalen Positionsverlagerung ist die Hülse einer deutlich geringeren Beanspruchung ausgesetzt als bei einer Deformation. Gemäß den Angaben in den Fig. 4b und 4c ist das Erzeugen eines asymmetrischen Profils der Hülse nach dem erfindungsgemäßen Verfahren mit einer geringeren Beanspruchung der Hülse 7 verbunden.

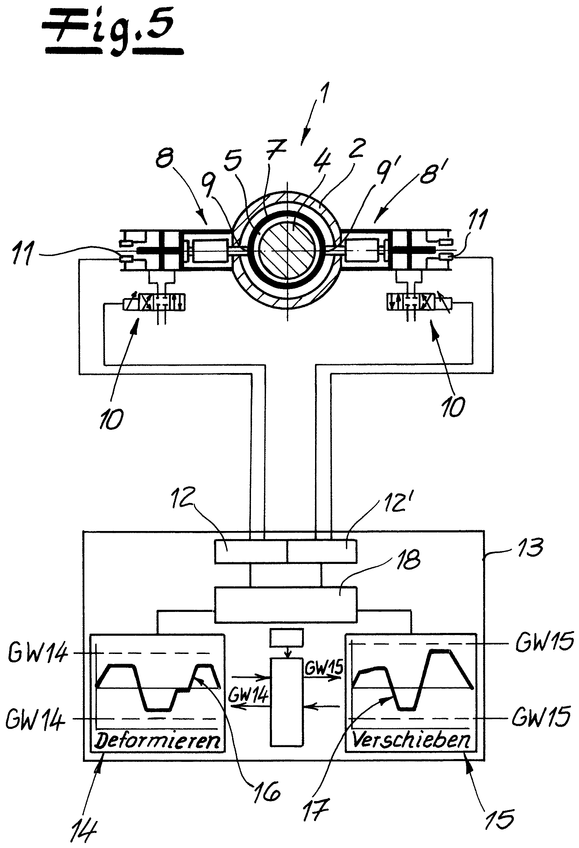

Bei Durchführung des erfindungsgemäßen Verfahrens gemäß Fig. 3 wird der Grenzwert GW14 und optional auch der Grenzwert GW15 für den maximal zulässigen Stellweg der ersten Bewegungskomponente 14 bzw. den maximal zulässige Stellweg der zweiten Bewegungskomponente 15 individuell festgelegt.. Gemäß einer in Fig. 5 dargestellten Verfahrensvarianten werden keine starren Grenzwerte GW14, GW15 vorgegeben, sondern es wird eine Wechselwirkung zwischen den beiden Bewegungskomponenten 14, 15 berücksichtigt. So kann der Grenzwert für den maximal zulässigen Stellweg zur Positionsverlagerung der Hülse als variable Größe in Abhängigkeit des Stellweges der ersten Bewegungskomponente 14 festgelegt werden. Entsprechend kann auch der Grenzwert für den maximal zulässigen Stellweg zur symmetrischen Deformation der Hülse als variable Größe in Abhängigkeit des Stellweges der zweiten Bewegungskomponente 15 festgelegt werden. Wird beispielsweise der zulässige Deformationshub für eine symmetrische Deformation der Hülse 7 nicht voll ausgenutzt, kann ein größerer maximaler Verschiebeweg zugelassen werden. Für jeden Profilpunkt der paarweise und zeitgleich abgearbeiteten Profilkurven 16, 17 ist dann zu überprüfen, ob die Grenzwerte noch eingehalten werden. Wird beispielsweise an einem bestimmten Profilpunkt der zweiten Programmkurve 17 der durch den Grenzwert GW15 vorgesehene Verschiebeweg nicht voll ausgenutzt, so kann der Grenzwert GW14 für das symmetrische Deformieren nach oben angepasst werden. Wird hingegen beispielsweise ein größerer Stellweg zur horizontalen Verlagerung der Hülse 7 benötigt, wird der Grenzwert GW14 für die symmetrische Deformation nach unten korrigiert. Analog sind weitere Korrekturen möglich, wenn ein größerer Deformationshub für eine symmetrische Deformation benötigt werden sollte. Durch das in die Programmsteuerung 13 implementierte Rechenmodul wird für jeden Profilpunkt der paarweise abgearbeiteten Programmkurven 16, 17 geprüft, ob der Deformations- und der Verschiebeanteil kleiner oder gleich den jeweiligen Grenzwerten ist. In diesem Fall können die Vorgabewerte an die Regelkreise weitergeleitet werden. Wird hingegen ein Grenzwert überschritten oder werden sogar beide Grenzwerte überschritten, so wird die Eingabe geblockt oder es wird nur ein dem Grenzwert entsprechender Anteil des Vorgabewertes abgearbeitet.

Wie bereits zuvor im Zusammenhang mit Fig. 3 erläutert, kann es ausreichend sein, lediglich den Grenzwert GW 14 für die erste Bewegungskomponente 14 zu berücksichtigen, wobei dieser dann nach dem in der Fig. 5 beschriebenen Ansatz in Abhängigkeit von dem aktuellen Wert der zweiten Bewegungskomponente 15 variiert.

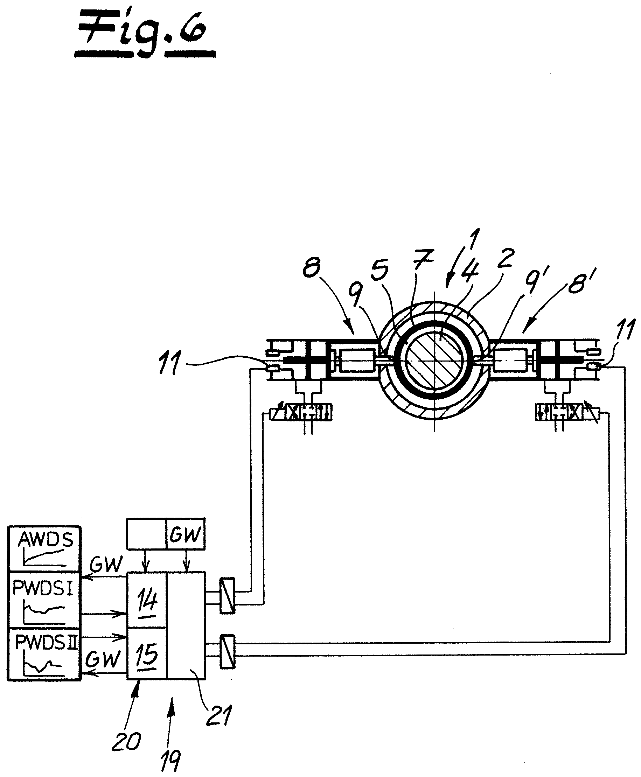

Die Fig. 6 zeigt ein Extrusionswerkzeug 1 mit einer Programmsteuerung nach dem Stand der Technik. Zum Implementieren des erfindungsgemäßen Verfahrens ist die Programmsteuerung durch eine Auswerteeinheit 19 erweitert worden. Die Düsenspaltbreite sowie die Düsenspaltgeometrie des in Fig. 6 dargestellten Extrusionswerkzeugs 1 werden nach Maßgabe eines Wanddickenprogramms und/oder in Abhängigkeit der aus dem Düsenspalt 5 austretenden Schlauchlänge der Vorformlinge 6 geregelt. Die Regelung erfolgt nach Programmkurven eines Wanddickenprogramms. Nach Maßgabe einer ersten Programmkurve (AWDS) wird eine axiale Stellbewegung des Dorns 4 geregelt und dadurch die Düsenspaltbreite über den gesamten Umfang variiert. Zur horizontalen Verstellung und zur elastischen Verformung der Hülse 7 werden zwei programmgesteuerte Stellantriebe 8, 8' verwendet, die an Kraftangriffspunkten 9, 9', welche um 180° versetzt sind, auf den Umfang der elastischen Hülse 7 wirken. Durch gleichgerichtete Bewegungen der Kraftangriffspunkte 9, 9' kann die Hülse horizontal verstellt werden. Durch entgegengerichtete und/oder dem Betrag nach unterschiedliche Stellbewegungen der Kraftangriffspunkte 9, 9' ist die elastische Hülse 7 verformbar. Jeder der Stellantriebe 8, 8' wird nach Maßgabe einer ihm zugeordneten Programmkurve PWDS I, PWDS II geregelt, wobei durch eine Deformation und/oder Verschiebung der Hülse 7 die Düsenspaltgeometrie verändert wird. Die Programmkurven PWDS I, PWDS II sind miteinander nicht gekoppelt. Die Stellsignale zur Steuerung der Stellantriebe 8, 8' werden zunächst der Auswerteeinheit 19 zugeführt, die in einem ersten Modul 20 die Stellsignale in eine erste Bewegungskomponente 14 zur symmetrischen Deformation der Hülse 7 und eine zweite Bewegungskomponente 15 zur horizontalen Positionsverlagerung der Hülse 7 aufspaltet. In einem zweiten Modul 21 werden die errechneten Stellwege der beiden Bewegungskomponenten 14, 15 an den Kraftangriffspunkten 9, 9' mit den Grenzwerten GW für den maximal zulässigen Stellweg verglichen. Wenn die vorgegebenen Grenzwerte GW nicht überschritten werden, werden die Stellwegsignale zur Steuerung der Stellantriebe 8, 8' freigegeben und an die Stellantriebe 8, 8' weitergeleitet. Bei Überschreiten zumindest eines Grenzwertes GW wird das an die Stellantriebe 8, 8' weitergeleitete Steuersignal korrigiert und es wird nur ein dem Grenzwert GW entsprechender Anteil der von den Programmkurven PWDS I, PWDS II vorgegebenen Sollwerte ausgeführt. Zusätzlich kann ein Fehlersignal abgegeben werden. Auch ist es denkbar, dass die Auswerteeinheit 19 die Grenzwerte GW an die Programmsteuerung zurückgibt und dadurch schon bei der Eingabe von neuen Vorgabewerten die Möglichkeit besteht, unzulässige Vorgaben zu unterbinden. Wie bereits im Zusammenhang mit den weiteren erfindungsgemäßen Ausgestaltungen erläutert, ist zum Schutz vor einer Überlastung gerade die erste Bewegungskomponente 14 ausschlaggebend, so dass es ausreichend sein kann, lediglich dazu einen Grenzwert GW 14 zu definieren und auch nur bei dem Überschreiten dieses Grenzwertes eine Rückmeldung an die Programmsteuerungen PWDS I und PWDS II zurückzugeben, wobei die Stellwerte in einer der Profilkurven oder vorzugsweise beiden Profilkurven auf einen zulässigen, von der Auswerteeinheit bestimmten Wert begrenzt werden. So modifizierte Stellwerte können auch einem Benutzer als Abweichung angezeigt und/oder farblich hervorgehoben werden.

Durch Verwendung der Auswerteeinheit 19 können bestehende Extrusionsanlagen, die nach dem in Fig. 1a/1b dargestellten Verfahren betrieben werden, nachgerüstet werden.

Bei allen zuvor beschriebenen Ausführungen sind der elastischen Hülse 7 zwei Stellantriebe 8, 8' zugeordnet, die an Kraftangriffspunkten, welche um 180° zueinander versetzt sind, auf den Umfang der elastischen Hülse 7 wirken. Die beiden Stellantriebe 8, 8' definieren eine erste Achse bzw. Hauptachse. Hierauf ist das erfindungsgemäße Verfahren jedoch nicht beschränkt. Das erfindungsgemäße Verfahren ist ohne weiteres auch dann anwendbar, wenn auf die elastisch deformierbare Hülse 7 noch zumindest ein weiterer Stellantrieb wirkt, dessen Kraftwirkungsrichtung auf die Hülse zur Hauptachse winkelversetzt ist. Insbesondere können zwei weitere Stellantriebe vorgesehen werden, die in einer zur Hauptachse um 90° versetzten Achse auf die elastische Hülse wirken. Das erfindungsgemäße Verfahren wird dann zumindest auf die Stellantriebe angewendet, die in der Hauptachse auf die elastische Hülse 7 einwirken.

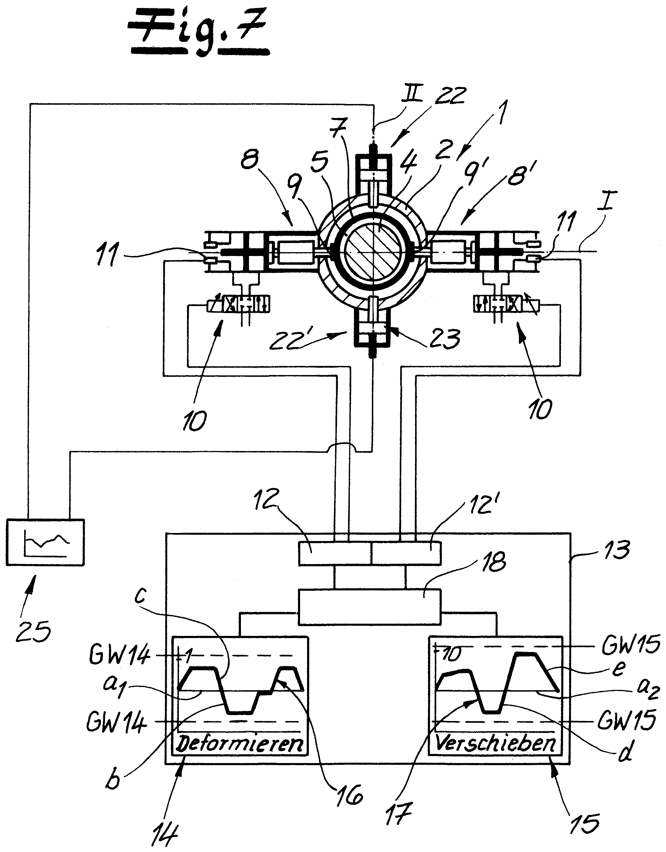

Im Ausführungsbeispiel der Fig. 7 werden zusätzlich zu den in einer ersten Deformationsachse I wirkenden Stellantrieben 8, 8' zwei weitere Stellantriebe 22, 22' verwendet, deren Kraftwirkungsrichtung in einer zweiten Deformationsachse II radial zur Hülse 7 ausgerichtet ist. Die in der ersten Deformationsachse I, der Hauptdeformationsachse, wirkenden Stellantriebe 8, 8' werden nach dem anhand der Fig. 3 erläuterten Verfahren gesteuert. Die in der zweiten Deformationsachse II angeordneten Stellantriebe 22, 22' werden mittels eines Programms 25 gesteuert, welches synchron mit der Extrusion der Vorformlinge 6 abläuft. Die in der zweiten Deformationsachse II wirksamen Stellantriebe 22, 22' bewirken, dass die Hülse 7 in eine von einer elliptischen Geometrie abweichende Querschnittsform gebracht wird. Eine zusätzliche Verformung der Hülse 7 durch die in der zweiten Deformationsachse II wirkenden Stellantriebe 22, 22' stellt eine extreme Belastung der elastisch deformierbaren Hülse 7 dar. Im Rahmen des erfindungsgemäßen Verfahrens wird diesem Umstand dadurch Rechnung getragen, dass der Grenzwert GW 14 für die erste Bewegungskomponente 14 der in der ersten Deformationsachse I wirkenden Stellantriebe 8, 8' reduziert wird, wenn die in der zweiten Deformationsachse II wirksamen Stellantriebe 22, 22' Kräfte auf die Hülse 7 ausüben, die zu einer Deformation der Hülse 2 beitragen. Der Grenzwert GW 14 für die erste Bewegungskomponente 14 kann in Abhängigkeit des an der Hülse 7 wirksamen Stellweges der in der zweiten Deformationsachse II auf die Hülse wirkenden Stellantriebe 22, 22' verändert werden.

Gemäß dem in Fig. 7 dargestellten Ausführungsbeispiel sind die in der zweiten Deformationsachse II wirksamen Stellantriebe 22, 22' nicht mit Hülse 7 verbunden und werden aus einer Ruhestellung 23, in der die Stellantriebe 22, 22' keinen Kontakt mit der Hülse 7 haben, gegen die Hülse 7 bewegt. Die Stellantriebe 22, 22' wirken also als Stößel auf den Umfang der elastischen Hülse 7. Befinden sich die Stößel im Einsatz, so wird die Hülse 7 in einer von der runden bzw. elliptischen Form abweichenden Form deformiert. Der Grenzwert GW14 für die erste Bewegungskomponente 14, welche eine symmetrische Deformation der Hülse in der ersten Deformationsachse I ermöglicht und aus gegensinnigen und dem Betrag nach gleich großen Stellwegen der Kraftangriffspunkte 9, 9' besteht, wird reduziert, wodurch einer zusätzlichen Beanspruchung der Hülse 7 durch die in der zweiten Deformationsachse II wirkenden Stößel Rechnung getragen wird. Der Grenzwert für die zweite Bewegungskomponente 15, die eine horizontale Positionsverlagerung der Hülse 7 in der ersten Deformationsachse I beschreibt und aus gleichgerichteten und dem Betrag nach gleich großen Stellwegen der Kraftangriffspunkte 9, 9' besteht, bleibt unverändert. Der optional berücksichtigte Grenzwert GW15 für die zulässige Positionsverlagerung der Hülse in Richtung der ersten Deformationsachse I wird durch die Wirkung der in der zweiten Deformationsachse II wirksamen Stellantriebe 22, 22' nicht beeinflusst. In dem in Fig. 7 dargestellten Ausführungsbeispiel ist nur eine Programmkurve des Programms zur Steuerung der in der zweiten Deformationsachse II angeordneten Stellantriebe 22, 22' dargestellt worden. Im Rahmen der Erfindung liegt es auch, dass jeder Stellantrieb, der in der zweiten Deformationsachse II angeordneten Stellantriebe 22, 22' unabhängig von dem anderen Stellantrieb angesteuert werden kann. Dann bestimmt diejenige Seite, die am stärksten auf die elastische Hülse wirkt, die Änderung des Grenzwertes GW 14. Wenn die Stellantriebe 22, 22' sich in der Ruheposition 23 befinden, d. h. die Stößel soweit zurückgefahren sind, dass sie nicht auf die elastische Hülse 7 wirken, so verhält sich die Hülse 7 entsprechend in der anhand von Fig. 3 erläuterten Weise.

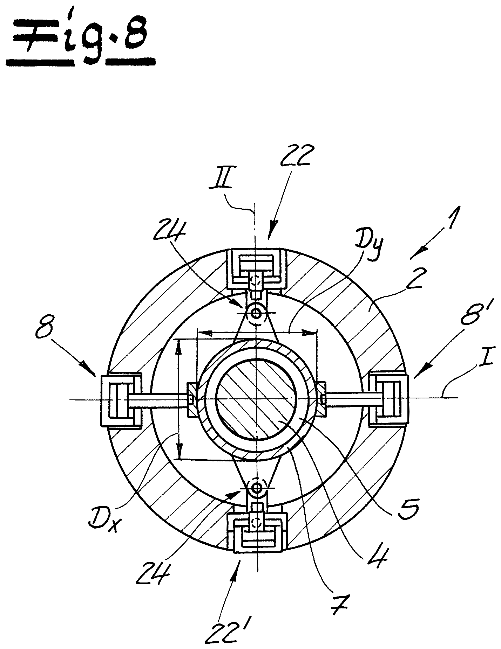

In einem weiteren, in Fig. 8 dargestellten, Ausführungsbeispiel sind die in der zweiten Deformationsachse II wirksamen Stellantriebe 22, 22' mit der elastisch deformierbaren Hülse 7 verbunden, wobei die Verbindung 24 eine horizontale Positionsverlagerung der Hülse 7 in der ersten Deformationsachse I zulässt. Die Verbindung 24 kann insbesondere aus einer Gelenkverbindung bestehen. Der Grenzwert GW14 für die erste Bewegungskomponente 14 der in der ersten Deformationsachse I wirkenden Stellantriebe 8, 8' wird reduziert, wenn die Stellwege der in der zweiten Deformationsachse II wirksamen Stellantriebe 22, 22' eine Deformation der Hülse 7 in der zweiten Deformationsachse II bewirken. In dem in Fig. 8 dargestellten Ausführungsbeispiel gibt das Maß $D_y$ den Durchmesser der elastischen Hülse in Richtung der ersten Deformationsachse I, im Folgenden Hauptdeformationsachse genannt, an. Da die in der zweiten Deformationsachse II wirksamen Stellantriebe 22, 22'gelenkig mit der Hülse verbunden sind, kann die elastisch deformierbare Hülse ohne weiteres auch in Richtung der Hauptdeformationsachse I verschoben bzw. verlagert werden. Das Maß $D_x$ gibt den Durchmesser der elastisch deformierbaren Hülse 7 in Richtung der zweiten Deformationsachse II an. Der Durchmesser der unverformten Hülse ist $D_0$ Für die nicht deformierte Hülse gilt daher:

$$(1) \qquad D_0 = D_y = D_x$$

Für die Deformation $\Delta D_x$ bzw. $\Delta D_y$ ergibt sich somit in X-Richtung bzw. Y-Richtung folgende mathematische Bedingungen:

$$(2) \qquad \Delta D_x = D_x - D_0$$

$$(3) \qquad \Delta D_y = D_y - D_0$$

Zur Bewertung der Deformation bildet man den Wert E als Summe der Werte für $\Delta D_x$ und $\Delta D_y$

$$(4) \qquad E = \Delta D_x + \Delta D_y$$

Für den Fall

$$(5) \qquad E = 0$$

liegt eine rein elliptische Deformation vor. Es kann der Grenzwert GW14 für die erste Bewegungskomponente ohne Korrektur verwendet werden. Sofern der Summenwert E von Null abweicht

liegt eine nichtelliptische, aber immer noch symmetrische Deformation vor. Diese Art von Deformation hat einen erheblichen Einfluss auf die zulässige Deformation, so dass der Grenzwert GW14 für die erste Bewegungskomponente 14 korrigiert werden muss. Der Grenzwert GW14 ist insofern eine Funktion des Summenwertes E.

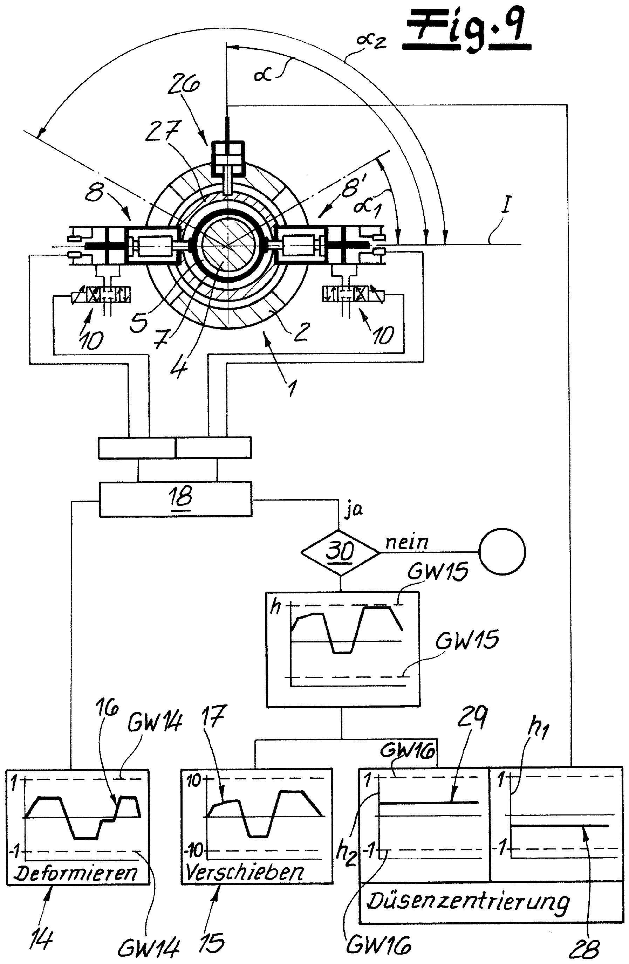

Gemäß einem in Fig. 9 dargestellten Ausführungsbeispiel werden die beiden in einer Deformationsachse I auf die elastische Hülse 7 wirkenden Stellantriebe 8, 8' und ein zusätzlicher Stellantrieb 26, dessen Kraftwirkungsrichtung unter einen Winkel $\alpha$ von vorzugsweise 90° zur Deformationsachse I ausgerichtet ist, zur Düsenzentrierung verwendet. Die elastisch deformierbare Hülse 7 und die in der Deformationsachse I auf die Hülse 7 wirkenden Stellantriebe 8, 8' sind auf einem Träger 27 angeordnet, der mit einer horizontalen Bewegungskomponente quer zur Deformationsachse I bewegbar ist. Der zusätzliche Stellantrieb 26 wirkt auf diesen Träger 27. Im Ausführungsbeispiel ist die Kraftwirkungsrichtung des zusätzlichen Stellantriebes 26 unter einem rechten Winkel zur Deformationsachse I ausgerichtet. Die Kraftwirkungsrichtung des zusätzlichen Stellantriebes 26 kann jedoch ohne weiteres in einem Winkelbereich zwischen $\alpha_1 = 30°$ und $\alpha_2 = 150°$ variiert werden. Der zusätzliche Stellantrieb 26 kann über einen einzelnen Sollwert oder über eine Profilkurve 28 angesteuert werden. Da der zusätzliche Stellantrieb 26 auf eine andere Ebene des Extrusionswerkzeuges wirkt, wird die Verstellung der elastischen Hülse 7 in Richtung der Deformationsachse I durch die Bewegung des zusätzlichen Stellantriebes 26 nicht beeinflusst. Der Stellhub des zusätzlichen Stellantriebes hat somit keinen Einfluss auf die Grenzwerte GW14, GW15, die für eine symmetrische Deformation der Hülse 7 und eine horizontale Positionsverlagerung 7 festgelegt werden. Der Bewegungsanteil der Düsenzentrierung in Richtung der Deformationsachse I wird ebenfalls separat durch einen Sollwert oder eine Profilkurve 29 gesteuert. Dabei wird der von der Programmsteuerung 13 vorgegebene Stellweg entsprechend der Profilkurve 17 für eine horizontale Positionsverlagerung der elastischen Hülse in der Deformationsachse I und der Bewegungsanteil $h_2$ zur Düsenzentrierung in Richtung der Deformationsachse I überlagert. Mittels eines Logikelementes 30 wird abgefragt, ob der durch Superposition gebildete Stellhub h innerhalb des für die zweite Bewegungskomponente festgelegten Grenzwertes GW15 bleibt. Wird dieses Kriterium eingehalten, wird der Stellhub h ausgeführt und das anhand der Fig. 3 erläuterte Verfahren fortgeführt. Sofern der durch Superposition gebildete Stellhub h dem Betrag nach größer ist als der Grenzwert GW15 unterbleibt die Düsenzentrierung oder wird das Verfahren in geeigneter Weise gestoppt. Im Rahmen der Erfindung liegt es auch, dass ein fester oder von Betriebszuständen abhängiger Grenzwert GW16 für den maximal zulässigen Bewegungsanteil der Düsenzentrierung in Richtung der Deformationsachse I in der Programmsteuerung 13 hinterlegt wird. Der Grenzwert GW15 ist dann unter Berücksichtigung des für die Düsenzentrierung reservierten Grenzwertes GW16 anzupassen. Mit dem in Fig. 9 dargestellten Verfahren ist eine Düsenzentrierung des Extrusionswerkzeuges möglich, ohne dass der Betrieb des Extrusionswerkzeuges unterbrochen werden muss.

Als weitere Verbesserung der Betriebssicherheit können bei der Durchführung des erfindungsgemäßen Verfahrens Schutzeinrichtungen vorgesehen werden, die bei einer Störung der Energieversorgung die elastisch deformierbare Hülse in ein für das System unkritischen Zustand versetzen und/oder eine unkontrollierte Bewegung der Stellantriebe 8, 8' verhindern. Diese Schutzeinrichtungen sorgen dafür, dass die elastische Hülse 7 des Extrusionswerkzeuges 1 bei Auftreten eines Fehlers oder einer Störung einen für das System unkritischen Zustand einnimmt. Als Fehler- bzw. Störquellen sind das Ausfallen der Hauptenergie und/oder Hilfsenergie, ein Bauteilversagen sowie Bedienungsfehler zu berücksichtigen.

Zur Hauptenergie gehört die Energie zum Antrieb der Stellantriebe 8, 8'. Diese kann elektrisch, pneumatisch oder hydraulisch zur Verfügung stehen. Unter die Hauptenergie fällt ferner eine Spannungsversorgung für die Regelungen. Als Hilfsenergie wird die Energieversorgung regelungstechnischer Komponenten, z. B. Weggeber, Servoventile, Resolver und dergleichen, verstanden. Als Schutzeinrichtung wird zweckmäßig ein Restenergiespeicher vorgesehen, der genügend Antriebsenergie liefert, um die elastisch deformierbare Hülse 7 beim Ausfall der Haupt- und/oder Hilfsenergie in einen für das System unkritischen Zustand zu bewegen. Dabei können die Stellantriebe 8, 8' zum Schutz der elastischen Hülse 7 mit einem Bremssystem ausgerüstet werden, das im Falle eines Ausfalls der Haupt- oder Hilfsenergie eine unkontrollierte Bewegung der Stellantriebe 8, 8' verhindert. Das Bremssystem wird so angesteuert, dass es, solange ein Spannungssignal anliegt, inaktiv ist und bei einem Fortfall des Spannungssignals betätigt wird. Eine weitere Schutzeinrichtung kann darin bestehen, dass die Programmsteuerung 13 permanent ein Lebenszeichen abgibt. Bei Ausfall einer Haupt- oder Hilfsenergiequelle erlischt dieses Lebenszeichen und werden Sicherungselemente ausgelöst. So können beispielsweise mechanische Hubbegrenzungen bei einem Wegfall des Lebenszeichens vorfahren und den Deformationshub der elastischen Hülse begrenzen.

Bei der Durchführung des erfindungsgemäßen Verfahrens werden zweckmäßig Plausibilitätsprüfungen durchgeführt, ob sich die Regelung entsprechend den Vorgabewerten in einem vorgegebenen Toleranzfeld bewegt. Wird dieses Toleranzfeld verlassen, so kann die Regelung ein Signal an das System herausgeben, welches es diesem erlaubt, einen für die elastische Hülse 7 unkritischen Zustand einzunehmen. Als Schutzeinrichtungen zur Absicherung eines Bauteilversagens können Sensoren verwendet und mechanische Hubbegrenzungen vorgesehen werden. Zweckmäßig ist ferner eine redundante Auslegung von kritischen Komponenten. Um sicherzustellen, dass die elastische Hülse 7 beispielsweise in Folge eines Bauteilverfahrens nicht über den zulässigen Deformationsweg deformiert werden kann, können mechanische Hubbegrenzungen vorgesehen werden, die im Bedarfsfall aktiviert werden. Vorzugsweise werden diese Hubbegrenzungen angesteuert, dass sie bei einem Wegfall eines Signals vorfahren. Somit würden diese mechanischen Hubbegrenzungen bei einem Wegfall des Signals, z. B. infolge eines Stromausfalls, Kabelbruches oder eines negativen Ergebnisses der Plausibilitätsprüfung, in den Bewegungsraum der Stellantriebe 8, 8' einfahren. Als Antrieb für die mechanischen Hubbegrenzungen können insbesondere Druckfedern und/oder elektrische Haltemagnete verwendet werden.

Zum Schutz vor Bedienungsfehlern sollten Grenzwertabfragen vorgesehen werden. Um sicherzustellen, dass es infolge von unzulässigen Bedienwerten nicht zu einer Beschädigung der elastisch deformierbaren Hülse 7 kommen kann, werden die Eingabewerte hinsichtlich der einzuhaltenden Grenzwerte überprüft und erst dann, wenn sichergestellt ist, dass die neuen Eingabewerte keine unzulässige Belastung der elastischen Hülse ergeben, werden diese als Sollwerte übernommen. Des Weiteren sind Kollisionsabfragen zweckmäßig, die unter Berücksichtigung der Einbausituation der Hülse sicherstellen, dass es zu keinem Zeitpunkt zu einem Kontakt zwischen der Hülse 7 und dem Dorn 4 des Extrusionswerkzeuges oder dem Düsenring 3 des Extrusionswerkzeuges 1 kommen kann. Ein solcher Kontakt würde auch dann, wenn die Grenzwerte GW für die zulässige Verformung der Hülse 7 und Verschiebung der Hülse noch nicht erreicht sind, zu einer unzulässigen Belastung der Hülse führen. Durch weitere Schutzmaßnahmen sollte ferner Sorge getragen werden, dass die Eingabewerte nicht unbeabsichtigt verändert werden können. Ferner sind Schutzmaßnahmen zweckmäßig gegen ein unbeabsichtigtes Ein- und Ausschalten der Steuerung.

Im Rahmen der Erfindung liegt es ferner, dass in der Programmsteuerung 13 apparatespezifische Kennwerte und/oder Korrekturwerte zur Berücksichtigung anwendungsspezifischer Prozessbedingungen hinterlegt werden, die bei einer Festlegung der Grenzwerte GW für die erste Bewegungskomponente 14 und/oder die zweite Bewegungskomponente 15 berücksichtigt werden. Für den Betrieb der elastisch deformierbaren Hülse 7 kann beispielsweise eine Kennlinie in der Programmsteuerung 13 hinterlegt werden, mittels welcher der zulässige symmetrische Deformationsanteil sowie der zulässige Anteil für die horizontale Verlagerung bzw. Verschiebung der Hülse unter Berücksichtigung anwendungsspezifischer Parameter berechnet werden kann. Die Kennlinie kann zum einen verschiedene konstruktive Ausführungen des Extrusionswerkzeuges 1, insbesondere unterschiedliche Düsendurchmesser, und zum anderen anwendungsspezifische Prozessbedingungen und Stoffwerte berücksichtigen. Ein höherer anwendungsspezifischer Massedruck stellt für die elastisch deformierbare Hülse 7 beispielsweise eine höhere Belastung dar als ein geringerer Druck. Es leuchtet ein, dass bei einem höheren Massedruck die Belastungsgrenze der Hülse schon bei einer niedrigeren Deformation erreicht werden kann. Also kann es im Sinne der Erfindung sinnvoll sein, die zulässige Deformation der Hülse in Abhängigkeit von anwendungsspezifischen Prozessparameter so anzupassen, dass eine höhere Überbeanspruchung der Hülse sicher vermieden werden kann. Dazu dient die in der Steuerung hinterlegte Kennlinie, die ausgewählte Prozessparameter berücksichtigt und entsprechend die maximale Deformation der Hülse begrenzt. Da sich die Belastung der elastischen Hülse 7 beim Verschieben anders verhält als bei einer Deformation, kann anhand dieser zumindest einen Kennlinie auch die Änderung des Verschiebeanteils unter Berücksichtigung von kritischen, anwendungsspezifischen Prozessparametern ermittelt werden. Zur Abarbeitung der Kennlinie können Grenzwerte für ausgewählte Prozessparameter beispielsweise online, während der Produktion, ermittelt werden. Ebenso ist es im Sinne der Erfindung, dass diese Grenzwerte anhand von Erfahrungswerten manuell vorgegeben werden. Insbesondere kann die Kennlinie als sogenannte "Masterkennlinie" in der Programmsteuerung 13 fest hinterlegt werden.

**Patentansprüche**

1. Verfahren zur Extrusion von Vorformlingen, die an der Unterseite eines Extrusionswerkzeuges (1) aus einem ringförmigem Düsenspalt (5) des Extrusionswerkzeuges vertikal austreten und durch Blasformen zu Kunststoffhohlkörpern aufgeweitet werden, wobei die Geometrie des Düsenspaltes (5) während der Extrusion der Vorformlinge verändert wird, wobei zur Veränderung der Düsenspaltgeometrie zumindest eine elastisch deformierbare Hülse (7) verwendet wird, die innerhalb des Extrusionswerkzeuges (1) horizontal verstellbar angeordnet ist und eine innere Umfangsfläche oder eine äußere Umfangsfläche des Ringspaltes (5) bildet, wobei zur horizontalen Verstellung und zur elastischen Verformung der Hülse (7) zumindest zwei programmgesteuerte Stellantriebe (8, 8') verwendet werden, die an Kraftangriffspunkten (9, 9'), welche um 180° versetzt sind, auf den Umfang der elastischen Hülse (7) wirken und wobei die Hülse (7) durch gleichgerichtete Bewegungen der Kraftangriffspunkte (9, 9') horizontal verstellt wird und durch entgegengerichtete und/oder im Betrag unterschiedliche Bewegungen der Kraftangriffspunkten (9, 9') elastisch verformt wird,

   - wobei die Stellwege der Stellantriebe (8, 8') unter Verwendung einer synchron mit der Extrusion der Vorformlinge ablaufenden Programmsteuerung (13) gesteuert werden, welche die Bewegungen der Kraftangriffspunkte (9, 9') durch Superposition von zwei Bewegungskomponenten (14, 15) bestimmt,
   - wobei die erste Bewegungskomponente (14) eine symmetrische Deformation der Hülse (7) ermöglicht und aus gegensinnigen und dem Betrag nach gleichgroßen Stellwegen der Kraftangriffspunkte (9, 9') besteht,
   - wobei die zweite Bewegungskomponente (15) eine horizontale Positionsverlagerung der Hülse (17) ermöglicht und aus gleichgerichteten und dem Betrag nach gleichgroßen Stellwegen der Kraftangriffspunkte (9, 9') besteht

   **dadurch gekennzeichnet, dass**

   - der verfügbare Stellweg der Stellantriebe größer ist als ein zulässiger Deformationshub zur Verformung der Hülse und
   - wobei für die erste Bewegungskomponente mittels der Programmsteuerung ein Grenzwert (GW14) für den maximal zulässigen Stellweg vorgegeben wird.

2. Verfahren nach Anspruch 1, **dadurch gekennzeichnet, dass** auch für die zweite Bewegungskomponente (15) ein Grenzwert (GW14, GW15) für den maximal zulässigen Stellweg vorgegeben wird.

3. Verfahren nach Anspruch 2, **dadurch gekennzeichnet, dass** zwei in einer Deformationsachse (I) auf die elastische Hülse (7) wirkende Stellantriebe (8, 8') und ein zusätzlicher Stellantrieb (26), dessen Kraftwirkungsrichtung unter einen Winkel ($\alpha$) von vorzugsweise 90° zur Deformationsachse (I) ausgerichtet ist, zur Düsenzentrierung verwendet werden, wobei der Bewegungsanteil der Düsenzentrierung in Richtung der Deformationsachse (I) separat gesteuert wird und wobei der von der Programmsteuerung (13) vorgegebene Stellweg für eine horizontale Positionsverlagerung der elastischen Hülse in der Deformationsachse (I) und der Bewegungsanteil ($h_2$) zur Düsenzentrierung in Richtung der Deformationsachse (I) überlagert werden sowie ein durch Superposition gebildeter Stellhub (h) ausgeführt wird, wenn der Stellhub (h) innerhalb des für die zweite Bewegungskomponente (15) festgelegten Grenzwertes (GW15) bleibt.

4. Verfahren nach Anspruch 3, **dadurch gekennzeichnet, dass** die elastisch deformierbare Hülse (7) und die in der Deformationsachse (I) auf die Hülse (7) wirkenden Stellantriebe (8, 8') auf einem Träger (27) angeordnet werden, der mit einer horizontalen Bewegungskomponente quer zur Deformationsachse (I) bewegbar ist, und dass der zusätzliche Stellantrieb (26) auf den Träger (27) wirkt.

5. Verfahren nach einem der Ansprüche 1 bis 4, **dadurch gekennzeichnet, dass** die Stellwege der ersten Bewegungskomponente (14) und optional die Stellwege der zweiten Bewegungskomponente (15) als separate Funktionen (16, 17) jeweils in Abhängigkeit einer Funktionsgröße, welche mit der Extrusion eines Vorformlings korreliert, festgelegt werden.

6. Verfahren nach einem der Ansprüche 1 bis 5, **dadurch gekennzeichnet, dass** die Stellantriebe (8, 8') an den Kraftangriffspunkten (9, 9') Zugkräfte und Druckkräfte auf die Hülse ausüben und dass die für die erste Bewegungskomponente (14) festgelegten Stellwege um eine Nulllage ($a_1$) einen Stellweganteil (b) in Zugrichtung und einen Stellweganteil (c) in Druckrichtung aufweisen und dass die für die zweite Bewegungskomponente (15) festgelegten Stellwege um eine Nulllage ($a_2$) einen Stellweganteil (d) in einer ersten Richtung und einen Stellweganteil (e) in entgegengesetzter Richtung aufweisen.

7. Verfahren nach einem der Ansprüche 1 bis 6, **dadurch gekennzeichnet, dass** der Grenzwert (GW14) für den maximal zulässigen Stellweg zur symmetrischen Deformation der Hülse (7) als variable Größe in Abhängigkeit einer variablen Zustandsgröße, insbesondere des Stellweges der zweiten Bewegungskomponente (15) und/oder einer an der Hülse (7) wirkenden Kraft festgelegt wird.

8. Verfahren nach einem der Ansprüche 1 bis 7, **dadurch gekennzeichnet, dass** die Stellantriebe (8, 8') von separaten Programmen (PWDS I, PWDS II) gesteuert werden, die synchron mit der Extrusion der Vorformlinge (6) ablaufen und jeweils den Stellweg des zugeordneten Stellantriebes (8, 8') in Abhängigkeit einer mit der Extrusion eines Vorformlings korrelierenden Funktionsgröße bestimmen, dass die Stellsignale zur Steuerung der Stellantriebe (8, 8') zunächst einer Auswerteeinheit (19) zugeführt werden, welche die Stellsignale in eine erste Bewegungskomponente (14) zur symmetrischen Deformation der Hülse (7) und eine zweite Bewegungskomponente (15) zur horizontalen Positionsverlagerung der Hülse (7) aufspaltet und welche die errechneten Stellwege der ersten Bewegungskomponente (14) mit dem Grenzwert (GW14) für den maximal zulässigen Stellweg vergleicht, und dass die Stellsignale zur Steuerung der Stellantriebe freigegeben und an die Stellantriebe (8, 8') weitergeleitet werden, wenn der vorgegebene Grenzwert (GW14) nicht überschritten wird.

9. Verfahren nach einem der Ansprüche 1 bis 8, **dadurch gekennzeichnet, dass** beim Überschreiten zumindest eines Grenzwertes (GW14, GW15) das an die Stellantriebe (8, 8') weitergeleitete Steuersignal korrigiert und nur ein dem Grenzwert (GW) entsprechender Anteil der von dem Programm vorgegebenen Sollwerte ausgeführt wird.

10. Verfahren nach einem der Ansprüche 1 bis 9, **dadurch gekennzeichnet, dass** in der Programmsteuerung (13) apparatespezifische Kennwerte und/oder Korrekturwerte zur Berücksichtigung anwendungsspezifischer Prozessbedingungen hinterlegt werden, die bei einer Festlegung des Grenzwertes (GW14) für den maximal zulässigen Stellweg zur symmetrischen Deformation der Hülse (7) und/oder bei einer Festlegung des Grenzwertes (GW15) für den maximal zulässigen Stellweg zur horizontalen Positionsverlagerung der Hülse (7) berücksichtigt werden.

11. Verfahren nach einem der Ansprüche 1 bis 10, **dadurch gekennzeichnet, dass** zusätzlich zu den in einer ersten Deformationsachse (I) wirkenden Stellantrieben (8, 8') zumindest zwei weitere Stellantriebe (22, 22') verwendet werden, deren Kraftwirkungsrichtung in einer zweiten Deformationsachse (II) radial zur Hülse (7) ausgerichtet ist, und dass der Grenzwert (GW14) für die erste Bewegungskomponente (14) der in der ersten Deformationsachse (I) wirkenden Stellantriebe (8, 8') reduziert wird, wenn die in der zweiten Deformationsachse (II) wirksamen Stellantriebe (22, 22') Kräfte auf die Hülse (7) ausüben, die zu einer Deformation der Hülse (7) beitragen.

12. Verfahren nach Anspruch 11, **dadurch gekennzeichnet, dass** die in der zweiten Deformationsachse (II) wirksamen Stellantriebe (22, 22') nicht mit der Hülse (7) verbunden sind und aus einer Ruhestellung (23), in der die Stellantriebe (22, 22') keinen Kontakt mit der Hülse (7) haben, gegen die Hülse (7) bewegt werden.

13. Verfahren nach Anspruch 11, **dadurch gekennzeichnet, dass** die in der zweiten Deformationsachse (II) wirksamen Stellantriebe (22, 22') mit der Hülse (7) verbunden werden, wobei die Verbindung (24) eine horizontale Positionsverlagerung der Hülse (7) in der ersten Deformationsachse (I) zulässt.

14. Verfahren nach einem der Ansprüche 11 bis 13, **dadurch gekennzeichnet, dass** die in der zweiten Deformationsachse (II) wirksamen Stellantriebe (22, 22') nach einem Programm (25), welches synchron mit der Extrusion der Vorformlinge (6) abläuft, gesteuert werden.

15. Verfahren nach einem der Ansprüche 1 bis 14, **dadurch gekennzeichnet, dass** Schutzeinrichtungen vorgesehen werden, die bei einer Störung der Energieversorgung die elastisch deformierbare Hülse (7) in einen für das System unkritischen Zustand versetzen und/oder eine unkontrollierte Bewegung der Stellantriebe (8, 8') verhindern.

16. Blasformanlage zur Durchführung eines Verfahrens nach einem der Ansprüche 1 bis 15, mit einem einen ringförmigem Düsenspalt (5) aufweisenden Extrusionswerkzeug (1), wobei das Extrusionswerkzeug (1) eine elastisch deformierbare Hülse (7) zur Veränderung der Geometrie des Düsenspaltes (5) während der Extrusion eines Vorformlinges aufweist, welche innerhalb des Extrusionswerkzeuges (1) horizontal verstellbar angeordnet ist und eine innere Umfangsfläche oder eine äußere Umfangsfläche des Ringspaltes (5) bildet, wobei zur horizontalen Verstellung und zur elastischen Verformung der Hülse (7) zumindest zwei programmgesteuerte Stellantriebe (8, 8') vorgesehen sind, die an Kraftangriffspunkten (9, 9'), welche um 180° versetzt sind, auf den Umfang der elastischen Hülse (7) wirken, wobei die Hülse (7) durch gleichgerichtete Bewegungen der Kraftangriffspunkte (9, 9') horizontal verstellbar ist und durch entgegengerichtete und/oder im Betrag unterschiedliche Bewegungen der Kraftangriffspunkten (9, 9') elastisch verformbar ist und wobei die Stellantriebe (8, 8') an eine Programmsteuerung (13) angeschlossen sind, welche dazu eingerichtet ist, die Bewegung der Stellantriebe während der Extrusion zu steuern, wobei die Programmsteuerung (13) dazu eingerichtet ist, die Bewegungen der Kraftangriffspunkte (9, 9') durch Superposition von zwei Bewegungskomponenten (14, 15) zu bestimmen,

- wobei die erste Bewegungskomponente (14) eine symmetrische Deformation der Hülse (7) ermöglicht und aus gegensinnigen und dem Betrag nach gleichgroßen Stellwegen der Kraftangriffspunkte (9, 9') besteht,
- wobei die zweite Bewegungskomponente (15) eine horizontale Positionsverlagerung der Hülse (17) ermöglicht und aus gleichgerichteten und dem Betrag nach gleichgroßen Stellwegen der Kraftangriffspunkte (9, 9') besteht

**dadurch gekennzeichnet, dass**

- der verfügbare Stellweg der Stellantriebe größer ist als ein zulässiger Deformationshub zur Verformung der Hülse und
- wobei die Blasformanlage so eingerichtet ist, dass für die erste Bewegungskomponente mittels der Programmsteuerung ein Grenzwert (GW14) für den maximal zulässigen Stellweg vorgegeben wird.

## Claims

1. A method for the extrusion of preforms, which, on the underside of an extrusion die (1), emerge vertically from an annular nozzle gap (5) of the extrusion die, and are expanded by blow moulding to form hollow plastic bodies, wherein the geometry of the nozzle gap (5) is altered during the extrusion of the preforms, wherein at least one elastically deformable sleeve (7) is used for purposes of altering the nozzle gap geometry, which sleeve (7) is arranged within the extrusion die (1) such that it can be adjusted horizontally, and forms an inner peripheral surface or an outer peripheral surface of the annular gap (5), wherein at least two program-controlled actuators (8, 8') are used for the horizontal adjustment and the elastic deformation of the sleeve (7), which actuators (8,8') act on the perimeter of the elastic sleeve (7) at force application points (9, 9') that are offset by 180°, and wherein the sleeve (7) is horizontally adjusted by movements of the force application points (9, 9') in the same direction, and is elastically deformed by movements of the force application points (9, 9') in opposite directions, and/or by differing magnitudes,

- wherein the adjustment paths of the actuators (8, 8') are controlled using a program controller (13), which runs synchronously with the extrusion of the preforms, and which determines the movements of the force application points (9, 9') by the superposition of two movement components (14, 15),
- wherein the first movement component (14) enables a symmetrical deformation of the sleeve (7), and consists of opposing, and, in terms of magnitude, equally large, adjustment paths of the force application points (9, 9'),
- wherein the second movement component (15) enables a horizontal positional displacement of the position of the sleeve (17) and consists of adjustment paths of the force application points (9, 9') in the same direction and of the same magnitude,

**characterised in that**

- the available adjustment path of the actuators is greater than a permissible deformation stroke for the deformation of the sleeve, and
- wherein for the first movement component a limiting value (GW14) for the maximum permissible adjustment path is specified by means of the program controller.

2. The method according to Claim 1, **characterised in that** a limiting value (GW14, GW15) for the maximum permissible adjustment path is also specified for the second movement component (15).

3. The method according to Claim 2, **characterised in that** two actuators (8, 8') acting on the elastic sleeve (7) along a deformation axis (I), and an additional actuator (26), whose direction of force action is aligned at an angle ($\alpha$) of preferably 90° to the deformation axis (I), are used for purposes of nozzle centring, wherein the movement component of the nozzle centring in the direction of the deformation axis (I) is controlled separately, and wherein the adjustment path specified by the program controller (13) for a horizontal positional displacement of the elastic sleeve along the deformation axis (I), and the movement component ($h_2$) for purposes of nozzle centring in the direction of the deformation axis (I), are superimposed, and an adjustment travel (h) formed by superposition is executed, if the adjustment travel (h) remains within the limiting value (GW15) defined for the second movement component (15).

4. The method according to Claim 3, **characterised in that** the elastically deformable sleeve (7), and the actuators (8, 8') acting on the sleeve (7) along the deformation axis (I), are arranged on a carrier (27), which can be moved with a horizontal movement component transverse to the deformation axis (I), and **in that** the additional actuator (26) acts on the carrier (27).

5. The method according to one of the Claims 1 to 4, **characterised in that** the adjustment paths of the first movement component (14), and optionally, the adjustment paths of the second movement component (15), are defined as separate functions (16, 17), each depending on a functional parameter, which correlates with the extrusion of a preform.

6. The method according to one of the Claims 1 to 5, **characterised in that** the actuators (8, 8') exert tensile forces and compressive forces on the sleeve at the force application points (9, 9'), and **in that** the adjustment path determined for the first movement component (14) about a zero position ($a_1$) has an adjustment path component (b) in the tensile direction and an adjustment path (c) in the compressive direction, and **in that** the adjustment path determined for the second movement component (15) about a zero position ($a_2$) has an adjustment path component (d) in a first direction and an adjustment path (e) in the opposite direction.

7. The method according to one of the Claims 1 to 6, **characterised in that** the limiting value (GW14) for the maximum permissible adjustment path for the symmetrical deformation of the sleeve (7) is defined as a variable parameter as a function of a variable state parameter, in particular of the adjustment path of the second movement component (15), and/or of a force acting on the sleeve (7).

8. The method according to one of the Claims 1 to 7, **characterised in that** the actuators (8, 8') are controlled by separate programs (PWDS I, PWDS II) which run synchronously with the extrusion of the preforms (6), and in each case determine the adjustment path of the associated actuator (8, 8') as a function of a functional parameter correlating with the extrusion of a preform, **in that** the adjustment signals for the control of the actuators (8, 8') are first supplied to an evaluation unit (19), which splits the actuating signals into a first movement component (14) for the symmetrical deformation of the sleeve (7), and a second movement component (15) for the horizontal positional displacement of the sleeve (7), and which compares the calculated adjustment paths of the first movement component (14) with the limiting value (GW14) for the maximum permissible adjustment path, and **in that** the adjustment signals for the control of the actuators are released and forwarded to the actuators (8, 8') if the specified limiting value (GW14) is not exceeded.

9. The method according to one of the Claims 1 to 8, **characterised in that** if at least one limiting value (GW14, GW15) is exceeded, the control signal forwarded to the actuators (8, 8') is corrected, and only one component of the set values specified by the program corresponding to the limiting value (GW) is executed.

10. The method according to one of the Claims 1 to 9, **characterised in that** apparatus-specific characteristic values and/or correction values are stored in the program controller (13) for purposes of taking into account application-specific process conditions; these are taken into account when determining the limiting value (GW14) for the maximum permissible adjustment path for the symmetrical deformation of the sleeve (7), and/or when determining the limiting value (GW15) for the maximum permissible adjustment path for the horizontal positional displacement of the sleeve (7).

11. The method according to one of the Claims 1 to 10, **characterised in that** in addition to the actuators (8, 8') acting along a first deformation axis (I), at least two further actuators (22, 22') are used, the direction of force action of which is aligned radially to the sleeve (7) along a second deformation axis (II), and **in that** the limiting value (GW14) for the first movement component (14) of the actuators (8, 8') acting in the first deformation axis (I) is reduced if the actuators (22, 22') acting along the second deformation axis (II) exert forces on the sleeve (7) that contribute to a deformation of the sleeve (7).

12. The method according to Claim 11, **characterised in that** the actuators (22, 22') acting along the second deformation axis (II) are not connected to the sleeve (7), and are moved against the sleeve (7) from a rest position (23), in which the actuators (22, 22') have no contact with the sleeve (7).

13. The method according to Claim 11, **characterised in that** the actuators (22, 22') acting along the second deformation axis (II) are connected to the sleeve (7), wherein the connection (24) permits a horizontal positional displacement of the sleeve (7) along the first deformation axis (I).

14. The method according to one of the Claims 11 to 13, **characterised in that** the actuators (22, 22') acting along the second deformation axis (II) are controlled according to a program (25), which runs synchronously with the extrusion of the preforms (6).

15. The method according to one of the Claims 1 to 14, **characterised in that** protective devices are provided, which, in the event of a fault in the power supply, move the elastically deformable sleeve (7) into a state that is not critical for the system, and/or prevent an uncontrolled movement of the actuators (8, 8').

16. A blow moulding facility for the execution of a method according to one of the Claims 1 to 15, with an extrusion die (1) having an annular nozzle gap (5), wherein the extrusion die (1) has an elastically deformable sleeve (7) for purposes of altering the geometry of the nozzle gap (5) during the extrusion of a preform, which sleeve (7) is arranged within the extrusion die (1) such that it can be adjusted horizontally, and forms an inner peripheral surface or an outer peripheral surface of the annular gap (5), wherein at least two program-controlled actuators (8, 8') are provided for purposes of horizontal adjustment and elastic deformation of the sleeve (7); these act on the perimeter of the elastic sleeve (7) at force application points (9, 9') that are offset by 180°, wherein the sleeve (7) is horizontally adjustable by movements of the force application points (9, 9') in the same direction, and is elastically deformable by movements of the force application points (9, 9') in opposite directions, and/or of different magnitudes, and wherein the actuators (8, 8') are connected to a program controller (13), which is set up so as to control the movement of the actuators during extrusion, wherein the program controller (13) is set up so as to determine the movements of the force application points (9, 9') by superposition of two movement components (14, 15),

- wherein the first movement component (14) enables a symmetrical deformation of the sleeve (7), and consists of opposing, and, in terms of magnitude, equally large, adjustment paths of the force application points (9, 9'),
- wherein the second movement component (15) enables a horizontal positional displacement of the position of the sleeve (17) and consists of adjustment paths of the force application points (9, 9') in the same direction and of the same magnitude,

**characterised in that**,

- the available adjustment path of the actuators is greater than a permissible deformation stroke for the deformation of the sleeve, and
- wherein the blow moulding system is set up such that a limiting value (GW14) for the maximum permissible adjustment path is specified for the first movement component by means of the program controller.

**Revendications**

1. Procédé d'extrusion d'ébauches qui sortent verticalement par la face inférieure d'un outil d'extrusion (1) d'un interstice de buse de forme annulaire (5) de l'outil d'extrusion et sont élargies par moulage par soufflage pour former des corps creux en plastique, la géométrie de l'interstice de buse (5) changeant pendant l'extrusion des ébauches, dans lequel, pour modifier la géométrie de l'interstice de buse, on utilise au moins un manchon élastiquement déformable (7) qui est disposé de manière à être réglable horizontalement dans l'outil d'extrusion (1) et constitue une surface circonférentielle ou une surface circonférentielle extérieure de l'interstice annulaire (5), on utilise pour le réglage horizontal et pour la déformation élastique du manchon (7) au moins deux commandes de réglage pilotées par programme (8, 8') qui agissent sur des points d'application de force (9, 9') qui sont décalés de 180° sur la circonférence du manchon élastique (7) et le manchon (7) est décalé horizontalement par des mouvements orientés dans le même sens des points d'application de force (9, 9') et déformé élastiquement par des mouvements opposés et/ou d'une amplitude différente des points d'application de force (9, 9'),

- les courses de réglage des commandes de réglage (8, 8') étant contrôlées en utilisant une commande de programme (13) se déroulant de manière synchrone avec l'extrusion des ébauches et qui définit les mouvements des points d'application de force (9, 9') par superposition de deux composants de mouvement (14, 15),
- le premier composant de mouvement (14) permettant une déformation symétrique du manchon (7) et étant composé de courses de réglage en sens inverse et d'amplitude équivalente des points d'application de force (9, 9'),
- le second composant de mouvement (15) permettant un décalage horizontal de la position du manchon (17) et étant composé de courses de réglage orientées dans le même sens et d'amplitude équivalente des points d'application de force (9, 9'),

**caractérisé en ce que**

- la course de réglage existante des commandes de réglage est supérieure à une course de déformation admissible pour déformer le manchon et
- pour le premier composant de mouvement, une valeur limite (GW14) est prédéfinie au moyen de la commande de programme pour la course de réglage maximale admissible.

2. Procédé selon la revendication 1, **caractérisé en ce qu'**une valeur limite (GW14, GW15) est aussi prédéfinie pour le second composant de mouvement (15) pour la course de réglage maximale admissible.

3. Procédé selon la revendication 2, **caractérisé en ce que** de commande de réglage (8, 8') agissant dans un axe de déformation (I) sur le manchon élastique (7) et une commande de réglage supplémentaire (26) dont le sens d'effet de force est orienté suivant un angle ($\alpha$) de 90° de préférence par rapport à l'axe de déformation (I) sont utilisées pour le centrage de buse, la part de mouvement du centrage de buse étant contrôlée séparément en direction de l'axe de déformation (I) et la course de réglage prédéfinie par la commande de programme (13) pour un décalage horizontal de la position du manchon élastique dans l'axe de déformation (I) et la part de mouvement ($h_2$) pour le centrage de la buse en direction de l'axe de déformation (I) se superposant, et une course de réglage (h) formée par superposition étant exécutée si la course de réglage (h) reste dans la valeur limite (GW15) établie pour le second composant de mouvement (15).

4. Procédé selon la revendication 3, **caractérisé en ce que** le manchon déformable élastiquement (7) et les commandes de réglage (8, 8') agissant dans l'axe de déformation (I) sur le manchon (7) sont disposés sur un support (27) qui agit par un composant de mouvement horizontal qui est mobile transversalement à l'axe de déformation (I), et que la commande de réglage supplémentaire (26) agit sur le support (27).

5. Procédé selon une des revendications 1 à 4, **caractérisé en ce que** les courses de réglage du premier composant de mouvement (14) et en option les courses de réglage du second composant de mouvement (15) sont établies sous forme de fonctions séparées (16, 17) respectivement en fonction d'un paramètre fonctionnel qui est en corrélation avec l'extrusion d'une ébauche.

6. Procédé selon une des revendications 1 à 5, **caractérisé en ce que** les commandes de réglage (8, 8') exercent des forces de traction et des forces de compression sur le manchon aux points d'application de force (9, 9') et que les courses de réglage établies pour le premier composant de mouvement (14) présentent, autour d'une position zéro ($a_1$), une part de course de réglage (b) dans le sens de traction et une part de course de réglage (c) dans le sens de compression et que les courses de réglage établies pour le second composant de mouvement (15) présentent, autour d'une position zéro ($a_2$), une part de course de réglage (d) dans un premier sens et une part de course de réglage (e) dans un sens opposé.

7. Procédé selon une des revendications 1 à 6, **caractérisé en ce que** la valeur limite (GW14) pour la course de réglage maximale admissible pour la déformation symétrique du manchon (7) est établie sous forme d'un paramètre variable en fonction d'un paramètre d'état variable, en particulier de la course de réglage du second composant de mouvement (15) et/ou d'une force agissant au niveau du manchon (7).

8. Procédé selon une des revendications 1 à 7, **caractérisé en ce que** les courses de réglage (8, 8') sont contrôlées par des programmes séparés (PWDS I, PWDS II) qui se déroulent de manière synchrone avec l'extrusion des ébauches (6) et définissent respectivement la course de la commande de réglage associée (8, 8') en fonction d'un paramètre fonctionnel en corrélation avec l'extrusion d'une ébauche, que les signaux de réglage pour le contrôle des commandes de réglage (8, 8') sont d'abord acheminés à une unité d'exploitation (19) qui scinde les signaux de réglage en un premier composant de mouvement (14) pour la déformation symétrique du manchon (7) et un second composant de mouvement (15) pour le décalage horizontal de la position du manchon (7) et qui compare les courses de réglage calculées du premier composant de mouvement (14) à la valeur limite (GW14) pour la course de réglage maximale admissible, et que les signaux de réglage pour le contrôle des commandes de réglage sont validés et retransmis aux commandes de réglage (8, 8') si la valeur limite (GW14) n'est pas dépassée.

9. Procédé selon une des revendications 1 à 8, **caractérisé en ce que**, en cas de dépassement d'au moins une valeur limite (GW14, GW15), le signal de commande retransmis aux commandes de réglage (8, 8') est corrigé et que seule une partie correspondant à la valeur limite (GW) des valeurs théoriques prédéfinies dans le programme est exécutée.

10. Procédé selon une des revendications 1 à 9, **caractérisé en ce que** sont enregistrées dans la commande de programme (13) des valeurs caractéristiques spécifiques à l'appareil et/ou des valeurs correctives visant à tenir compte de conditions de traitement spécifiques à l'application et qui sont prises en compte lors d'une fixation de la valeur limite (GW14) pour la course de réglage maximale admissible pour la déformation symétrique du manchon (7) et/lors d'une fixation de la valeur limite (GW15) pour la course de réglage maximale admissible pour le décalage horizontal de position du manchon (7).

**11.** Procédé selon une des revendications 1 à 10, **caractérisé en ce que**, en plus des commandes de réglage (8, 8') agissant dans un premier axe de déformation (I), on utilise au moins deux autres commandes de réglage (22, 22') dont le sens d'effet de force est orienté dans un second axe de déformation (II) radialement par rapport au manchon (7), et que la valeur limite (GW14) pour le premier composant de mouvement (14) des commandes de réglage (8, 8') agissant dans le premier axe de déformation (I) est réduite si les commandes de réglage (22, 22') actives dans le second axe de déformation (II) exercent sur le manchon (7) des forces qui contribuent à une déformation du manchon (7).

**12.** Procédé selon la revendication 11, **caractérisé en ce que** les commandes de réglage (22, 22') actives dans le second axe de déformation (II) ne sont pas connectées au manchon (7) et peuvent être déplacées contre le manchon (7) depuis une position de repos (23) dans laquelle les commandes de réglage (22, 22') n'ont pas de contact avec le manchon (7).

**13.** Procédé selon la revendication 11, **caractérisé en ce que** les commandes de réglage (22, 22') actives dans le second axe de déformation (II) sont connectées au manchon (7), la connexion (24) permettant un décalage horizontal de position du manchon (7) dans le premier axe de déformation (I).

**14.** Procédé selon une des revendications 11 à 13, **caractérisé en ce que** les commandes de réglage (22, 22') actives dans le second axe de déformation (II) sont contrôlées d'après un programme (25) qui se déroule de manière synchrone avec l'extrusion des ébauches (6).

**15.** Procédé selon une des revendications 1 à 14, **caractérisé en ce qu'**il est prévu des dispositifs de protection qui, en cas d'anomalie de l'alimentation énergétique, passent le manchon élastiquement déformable (7) dans un état non critique pour le système et/ou empêchent un mouvement incontrôlé des commandes de réglage (8, 8').

**16.** Installation de moulage par soufflage pour la réalisation d'un procédé selon une des revendications 1 à 15, comportant un outil d'extrusion (1) présentant un interstice de buse de forme annulaire (5), l'outil d'extrusion (1) présentant un manchon élastiquement déformable (7) pour la modification de la géométrie de l'interstice de buse (5) pendant l'extrusion d'une ébauche, lequel manchon est disposé de manière à être réglable horizontalement dans l'outil d'extrusion (1) et constitue une surface circonférentielle ou une surface circonférentielle extérieure de l'interstice annulaire (5), étant prévues, pour le réglage horizontal et pour la déformation élastique du manchon (7), au moins deux commandes de réglage pilotées par programme (8, 8') qui agissent, à des points d'application de force (9, 9') qui sont décalés de 180°, sur la circonférence du manchon élastique (7), le manchon (7) pouvant être déplacé horizontalement par des mouvements orientés dans le même sens des points d'application de force (9, 9') et déformé élastiquement par des mouvements opposés et/ou d'amplitude différente des points d'application de force (9, 9'), et les commandes de réglage (8, 8') étant raccordées à une commande de programme (13) qui est conçue pour contrôler le mouvement des commandes de réglage pendant l'extrusion, la commande programme (13) étant conçue pour définir les mouvements des points d'application de force (9, 9') par superposition de deux composants de mouvement (14, 15),

- le premier composant de mouvement (14) permettant une déformation symétrique du manchon (7) et étant composé de courses de réglage en sens inverse et d'amplitude équivalente des points d'application de force (9, 9'),
- le second composant de mouvement (15) permettant un décalage horizontal de la position du manchon (17) et étant composé de courses de réglage orientées dans le même sens et d'amplitude équivalente des points d'application de force (9, 9'),

**caractérisée en ce que**

- la course de réglage existante des commandes de réglage est supérieure à une course de déformation admissible pour déformer le manchon et
- l'installation de moulage par soufflage est conçue pour que, pour le premier composant de mouvement, une valeur limite (GW14) soit prédéfinie au moyen de la commande de programme pour la course de réglage maximale admissible.

# Fig.1A
Stand der Technik

# Fig.1B
Stand der Technik

Fig.2A

Fig.2B

Fig.2C

# Fig.3

Fig. 4A

Fig. 4B

Fig. 4C

| | Stand der Technik | | Erfindungsgemäßes Verfahren | |
|---|---|---|---|---|
| | Stellweg gemäß PWDS I | Stellweg gemäß PWDS II | Stellweg für Sym. Deformation (erste Bewegungskomponente) | Stellweg für Verschiebung (zweite Bewegungskomponente) |
| Fig. 4A | 1,5 mm Ziehen | 1,5 mm Ziehen | 1,5 mm Ziehen | 0 mm |
| Fig. 4B | 1,5 mm Ziehen | 0 mm | 0,75 mm Ziehen | 0,75 mm in Richtung I |
| Fig. 4C | 1,5 mm Ziehen | 0,5 mm Drücken | 0,5 mm Ziehen | 1,0 mm in Richtung I |

**Fig.5**

Deformieren

Verschieben

GW14

GW15

# Fig.6

# Fig. 7

# Fig.8

# Fig·9

Deformieren

Verschieben

Düsenzentrierung

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0945245 A1
- DE 102012111117 A1
- US 2007278721 A1
- EP 0885711 A1